(19) **Europäisches Patentamt / European Patent Office / Office européen des brevets**

(11) **EP 4 578 634 A1**

(12) **EUROPEAN PATENT APPLICATION**
published in accordance with Art. 153(4) EPC

(43) Date of publication:
02.07.2025 Bulletin 2025/27

(21) Application number: 23857143.4

(22) Date of filing: 03.08.2023

(51) International Patent Classification (IPC):
*B29C 64/314* (2017.01)    *B29C 64/153* (2017.01)
*B29C 64/165* (2017.01)    *B29C 64/357* (2017.01)
*B33Y 10/00* (2015.01)    *B33Y 70/00* (2020.01)
*B33Y 70/10* (2020.01)    *C08G 69/00* (2006.01)
*C08G 69/08* (2006.01)    *C08K 3/013* (2018.01)
*C08L 77/00* (2006.01)    *B29K 309/00* (2006.01)

(52) Cooperative Patent Classification (CPC):
B29C 64/153; B29C 64/165; B29C 64/314;
B29C 64/357; B33Y 10/00; B33Y 70/00;
B33Y 70/10; C08G 69/00; C08G 69/08;
C08K 3/013; C08L 77/00

(86) International application number:
PCT/JP2023/028385

(87) International publication number:
WO 2024/043029 (29.02.2024 Gazette 2024/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.08.2022   JP 2022132712
31.03.2023   JP 2023058290

(71) Applicant: Toray Industries, Inc.
Tokyo 103-8666 (JP)

(72) Inventors:
• IWATA, Hirokazu
  Nagoya-shi, Aichi 455-8502 (JP)
• MATSUMOTO, Satoshi
  Nagoya-shi, Aichi 455-8502 (JP)
• NAKAMURA, Tomohiko
  Nagoya-shi, Aichi 455-8502 (JP)
• ASANO, Itaru
  Nagoya-shi, Aichi 455-8502 (JP)

(74) Representative: Mewburn Ellis LLP
Aurora Building
Counterslip
Bristol BS1 6BX (GB)

(54) **POLYMER PARTICLES AND POLYMER PARTICLE COMPOSITION FOR PRODUCING THREE-DIMENSIONAL SHAPED ARTICLE, PRODUCTION METHOD FOR POLYMER PARTICLES, AND THREE-DIMENSIONAL SHAPED ARTICLE AND PRODUCTION METHOD THEREFOR**

(57)    The present invention provides polymer particles for producing a three-dimensional shaped article by powder bed fusion method, the polymer particles being constituted of polyamides, wherein: the sphericity is 80 or more; the average particle diameter is 1 $\mu$m or more and 100 $\mu$m or less; the ratio of the terminal carboxyl group amount to the terminal amino group amount in the polyamides constituting the polymer particles is 0.01 or more and 0.8 or less; and the terminal adjuster content is more than 0 wt% and 0.2 wt% or less. When the polymer particles in which the ratio of the terminal carboxyl group amount to the terminal amino group amount in polyamides small and that contain little impurities are used for recycle printing a three-dimensional shaped article with a large-scale printing machine, it is possible to maintain the surface smoothness and the mechanical strength of the shaped article without mixing a large amount of virgin polymer particles, and further, it is possible to easily recover residual particles.

(Cont. next page)

# FIG. 1

## Description

Technical Field of the Invention

The present invention relates to polymer particles and a polymer particle composition which are suitably used for producing a three-dimensional shaped article by a powder bed fusion method, a method for producing polymer particles, and a three-dimensional shaped article and a method for producing the same, and in particular to polymer particles and a polymer particle composition which are preferably used when recovering the polymer particles and the polymer particle composition that have not been used for forming the shaped article and remain after printing and are used for another printing again.

Background Art of the Invention

As the method for producing a three-dimensional shaped article (hereinafter, may be simply referred to as shaped article), a powder bed fusion method is known. A shaped article due to the powder bed fusion method is produced by sequentially repeating a thin layer formation process in which powder is spread into a thin layer, and a cross-sectional shape formation process in which the formed thin layer is selectively melted into a shape corresponding to the cross-sectional shape of the object to be shaped, thereby bonding resin powder particles. Here, as the methods for selectively melting the powder, there are, in addition to a selective laser sintering, in which a layer of powder is formed and then a position corresponding to the cross-section of the object to be shaped is selectively irradiated with a laser, a selective absorption sintering or a selective inhibition sintering, in which an absorption accelerator or an absorption inhibitor of electromagnetic radiation is printed at a position corresponding to the cross-section of the object to be shaped and then a laser or another energy beam is irradiated, and the like. Such a method is expected to rapidly expand because it can realize high dimensional accuracy and mechanical strength of the shaped article.

In the powder bed fusion method, most of the powder used does not become a shaped article, and is recovered as residual polymer particles. It is preferred to reuse the residual particles for printing to reduce waste particles (hereinafter, may be simply referred to as recycle printing). However, the residual particles are exposed to a temperature slightly lower than the melting point for a long time during printing, which increases the molecular weight of the polymer. Therefore, the properties of the shaped article obtained by recycle printing change as compared with those of a shaped article obtained by printing using virgin powder. For recycle printing while maintaining the properties of a shaped article, it is necessary to mix a large amount of virgin particles with residual particles, and it is necessary to discard the residual powder according to the amount of virgin powder added.

To address such an issue, Patent document 1 discloses a polyamide powder excessively having carboxyl terminal groups. In Patent document 2, a polyamide powder which suppresses an increase in solution viscosity due to heating is disclosed.

Prior art documents

Patent documents

Patent document 1: JP-A-2004-137465
Patent document 2: JP-A-2018-059093

Summary of the Invention

Problems to be solved by the Invention

However, although the technologies described in Patent documents 1 and 2 can suppress the increase in molecular weight during printing, because the particle shape is indefinite, the particle surface is likely to deteriorate during printing. Therefore, there is a problem that the properties of the shaped article are likely to change, especially when recycle printing is performed using a large-scale printing machine in which the printing time becomes long.

Accordingly, an object of the present invention is to use polymer particles and a polymer particle composition having a high sphericity of particles, a small ratio of the amount of terminal carboxyl group and the amount of terminal amino group of the polyamide constituting the particles, and few impurities, and to maintain the surface smoothness and mechanical strength of the shaped article and further achieve an excellent recoverability of residual particles when recycle printing is performed using a large-scale printing machine with a long printing time, even if a large amount of virgin polymer particles and polymer particle composition are not mixed.

Means for solving the Problems

To achieve the above-described object, the present invention has the following configurations. Namely:

(1) A polymer particle constituted of a polyamide for producing a three-dimensional shaped article by a powder bed fusion method, wherein the sphericity of the polymer particle is 80 or more, the average particle diameter of the polymer particle is 1 $\mu$m or more and 100 $\mu$m or less, a ratio of a terminal carboxyl group amount to a terminal amino group amount in the polyamide constituting the polymer particle is 0.01 or more and 0.8 or less, and a terminal adjuster content of the polymer particle is more than 0 wt% and 0.2 wt% or less.

(2) The polymer particle for producing a three-dimensional shaped article according to (1), wherein a change rate between molecular weights of the polyamide constituting the polymer particle before and after being heated when the polymer particle is heated at a temperature of a melting point of the polyamide constituting the polymer particle - 5°C under a nitrogen atmosphere for 12 hours is 0.7 or more and 1.4 or less.

(3) The polymer particle for producing a three-dimensional shaped article according to (1) or (2), wherein a weight average molecular weight of the polyamide constituting the polymer particle is 1,000 g/mol or more and 100,000 g/mol or less.

(4) The polymer particle for producing a three-dimensional shaped article according to any of (1) to (3), wherein the terminal amino group amount in the polyamide constituting the polymer particle is $0.1 \times 10^{-5}$ mol/g or more and $4.0 \times 10^{-5}$ mol/g or less.

(5) The polymer particle for producing a three-dimensional shaped article according to any of (1) to (4), wherein a BET specific surface area of the polymer particle is 0.05 m$^2$/g or more and 1 m$^2$/g or less.

(6) The polymer particle for producing a three-dimensional shaped article according to any of (1) to (5), wherein the polyamide constituting the polymer particle includes at least one kind of polyamide selected from the group consisting of polyamide 12, polyamide 11, polyamide 1012, polyamide 1010, polyamide 6, polyamide 66, and a copolymer containing any of them.

(7) A polymer particle composition for producing a three-dimensional shaped article, containing a flow aid at 0.01 part by mass or more and 5 parts by mass or less with respect to 100 parts by mass of the polymer particle according to any of (1) to (6).

(8) A polymer particle composition for producing a three-dimensional shaped article, containing an inorganic reinforcing material at 10 parts by mass or more and 200 parts by mass or less with respect to 100 parts by mass of the polymer particle according to any of (1) to (6).

(9) A method for producing a three-dimensional shaped article by a powder bed fusion method, using the polymer particle according to any of (1) to (6).

(10) A method for producing a three-dimensional shaped article by a powder bed fusion method, using the polymer particle composition according to (7) or (8).

(11) A three-dimensional shaped article produced by a powder bed fusion method using a polymer particle or a polymer particle composition, wherein it includes a surface with a surface roughness of the three-dimensional shaped article of 15 $\mu$m or less, an average sphere equivalent diameter of voids observed by X-ray CT imaging is 1 $\mu$m or more and 100 $\mu$m or less, a ratio of a terminal carboxyl group amount to a terminal amino group amount in a polyamide constituting the polymer particle is 0.01 or more and 0.8 or less, and a terminal adjuster content is more than 0 wt% and 0.15 wt% or less.

(12) A method for producing the polymer particle for producing a three-dimensional shaped article according to (1), which is a method for producing a polymer particle by polymerizing a polyamide monomer (a) under the presence of a polymer (B) and a terminal adjuster (C) and in which the polyamide monomer (a) is being dissolved uniformly in the polymer (B) and a polymer particle (A) is precipitated after polymerization, wherein solubility parameters $\delta_A$, $\delta_B$ and $\delta_C$ of a polyamide constituting the polymer particle (A), the polymer (B) and the terminal adjuster (C) satisfy a relationship of $2 \leq (\delta_B - \delta_C)^2 - (\delta_A - \delta_C)^2 \leq 50$ [(J/cm$^3$)], and a compounding amount of the terminal adjuster (C) is 0.001 mol% or more and 4.0 mol% or less.

Effect according to the Invention

According to the present invention, when recycle printing in a large-scale printing machine is performed using polymer particles or a polymer particle composition in which the sphericality of the polymer particles is high, the ratio of terminal carboxyl group content to terminal amino group content of the polyamide constituting the polymer particles is small, and few impurities are contained, the surface smoothness and mechanical strength of the shaped article can be maintained even if a large amount of virgin polymer particles or virgin polymer particle composition is not mixed, and further, the residual particles can be easily recovered.

Brief explanation of the drawings

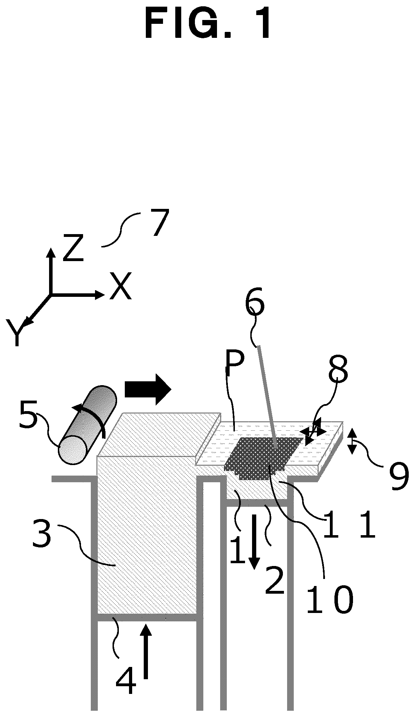

[Fig. 1] Fig. 1 is a schematic diagram showing an example of a production apparatus for a three-dimensional shaped article in the present invention.

Embodiments for carrying out the Invention

Hereinafter, the present invention will be explained in detail together with embodiments.

The polymer particles of the present invention are polymer particles composed of polyamide for producing a three-dimensional shaped article by a powder bed fusion method, the polymer particles have a sphericity of 80 or more, an average particle diameter of 1 μm or more and 100 μm or less, a ratio of the amount of terminal carboxyl groups to the amount of terminal amino groups of the polyamide constituting the polymer particles is 0.01 or more and 0.8 or less, and the content of a terminal adjuster of the polymer particles is more than 0 wt % and 0.2 wt % or less.

The sphericity indicating the spherical property of the polymer particles of the present invention is 80 or more. When the sphericity is high, the surface area becomes small, and deterioration of the polymer particles during printing can be suppressed, and when recycle printing is performed using a large-scale printing machine, the surface smoothness and mechanical strength of the shaped article can be maintained even without mixing a large amount of virgin polymer particles and polymer particle composition. The sphericity is preferably 85 or more, more preferably 90 or more, further preferably 92 or more, and particularly preferably 95 or more. Further, the upper limit is theoretically 100.

Where, the sphericity of the polymer particles of the present invention is calculated by observing 30 particles selected randomly from a scanning electron microscope photograph and averaging the ratio of the minor axis to the major axis of each particle according to the following equation.

[Equation 1]

$$S = \left[ \sum_{i=1}^{n} (b/a) \right] \times 100/n$$

Where, in the above-described equation, S is sphericity, a is major axis, b is minor axis, and n is the number of measurements (30).

The average particle diameter of the polymer particles of the present invention is in the range of 1 μm or more and 100 μm or less. The smaller the average particle diameter is, the better the surface smoothness of the shaped article becomes. The upper limit of the average particle diameter of the polymer particles is preferably 90 μm or less, more preferably 80 μm or less, and further preferably 75 μm or less. If the average particle diameter is too small, the particles are likely to aggregate due to their fineness, and the surface smoothness may deteriorate. The lower limit is more preferably 5 μm or more, further preferably 20 μm or more, and particularly preferably 30 μm or more.

The average particle diameter of the polymer particles of the present invention indicates a D50 particle diameter. The D50 particle diameter of the polymer particles is measured by a laser diffraction particle size distribution analyzer. Where, the D50 particle diameter of the polymer particles is a particle diameter at which the cumulative frequency from the small particle diameter side of the particle size distribution measured by the laser diffraction particle size distribution analyzer becomes 50%.

The ratio of the terminal carboxyl group amount to the terminal amino group amount of the polyamide constituting the polymer particles of the present invention is 0.01 or more and 0.8 or less. When the ratio of the terminal carboxyl group amount to the terminal amino group amount is small, the change in molecular weight during printing can be suppressed, and when recycle printing is performed in a large-scale printing machine, the mechanical strength of the shaped article can be maintained even without mixing a large amount of virgin polymer particles and polymer particle composition. The upper limit of the ratio of the terminal carboxyl group amount to the terminal amino group amount of the polyamide is preferably 0.6 or less, more preferably 0.4 or less, and further preferably 0.2 or less. Furthermore, if the ratio of the terminal carboxyl group amount to the terminal amino group amount of the polyamide is too close to 0, because the mechanical strength of the obtained shaped article will be low, the lower limit is preferably 0.05 or more, more preferably 0.1 or more.

The ratio of the terminal carboxyl group amount to the terminal amino group amount in the polyamide constituting the polymer particles indicates a value calculated by dividing the amount of smaller functional groups in the amount of terminal carboxyl groups and the amount of terminal amino groups by the amount of larger functional groups. Where, the terminal amino groups in the polyamide constituting the polymer particles are more susceptible to oxidation than the terminal carboxyl groups. Therefore, it is preferable that the amount of terminal amino groups in the polyamide constituting the polymer particles is smaller than the amount of terminal carboxyl groups. The theoretical upper limit of the ratio of the terminal carboxyl group amount to the terminal amino group amount is 1, and the lower limit is 0.

The amount of terminal carboxyl groups in the polyamide is determined by dissolving the polymer particles in benzyl alcohol and then performing neutralization titration with a potassium hydroxide ethanol solution, while the amount of terminal amino groups in the polyamide is determined by dissolving the polymer particles in P.E.A (phenol-ethanol solvent) and then performing neutralization titration with a hydrochloric acid aqueous solution.

It is preferred that each of the terminal carboxyl group amount and the terminal amino group amount of the polyamide is $0.1 \times 10^{-5}$ mol/g or more and $20 \times 10^{-5}$ mol/g or less. The smaller each of the terminal carboxyl group amount and the terminal amino group amount, the more the change in molecular weight during printing can be suppressed, and when recycle printing is performed in a large-scale printing machine, the mechanical strength of the shaped article can be maintained even without mixing a large amount of virgin polymer particles and polymer particle composition. The upper limit of each of the terminal carboxyl group amount and the terminal amino group amount is more preferably $5.0 \times 10^{-5}$ mol/g or less, further preferably $4.0 \times 10^{-5}$ mol/g or less, particularly preferably $3.0 \times 10^{-5}$ mol/g or less, and extremely preferably $2.0 \times 10^{-5}$ mol/g or less. On the other hand, if each of the terminal carboxyl group amount and the terminal amino group amount is too small, because the mechanical strength of the obtained shaped article will be low, so the lower limit of each of the terminal carboxyl group amount and the terminal amino group amount is more preferably $0.5 \times 10^{-5}$ mol/g or more, and further preferably $0.8 \times 10^{-5}$ mol/g or more.

The terminal adjuster content of the polymer particles in the present invention means a weight percentage concentration of the terminal adjuster contained in the polyamide constituting the polymer particles and remaining unreacted with the polyamide.

The terminal adjuster in the present invention is a compound which reacts with the terminal amino group or terminal carboxyl group of the polyamide to adjust the amount of the terminal amino groups or the terminal carboxyl groups of the polyamide.

The definition of the terminal adjuster varies depending upon the kind of polyamide monomer constituting the polymer particles. In case where dicarboxylic acids or diamines are the polyamide monomers, monofunctional compounds are defined as terminal adjusters, and in case where amino acids or lactams are the polyamide monomers, difunctional compounds as well as monofunctional compounds are defined as terminal adjusters.

As the monofunctional terminal adjuster, monoamines and monocarboxylic acids are exemplified. As concrete examples of the monoamines, exemplified are hexylamine, octylamine, dodecylamine, hexadecylamine, stearylamine, aniline, aniline derivatives, benzylamine, phenethylamine and the like, and as concrete examples of the monocarboxylic acids, exemplified are methanoic acid, acetic acid, propionic acid, butyl acid, pentanoic acid, hexanoic acid, heptanoic acid, octanoic acid, nonanoic acid, decanoic acid, lauric acid, myristic acid, palmitic acid, margaric acid, stearic acid, oleic acid, linoleic acid, linolenic acid, lactic acid, malic acid, citric acid, benzoic acid, benzoic acid derivatives and the like. As the difunctional terminal adjuster, diamines and dicarboxylic acids are exemplified. As concrete examples of diamines, exemplified are hexamethylene diamine, nonamethylene diamine, decane diamine, undecane diamine, dodecane diamine, phenylene diamines and the like, and as concrete examples of dicarboxylic acids, exemplified are adipic acid, azelaic acid, sebacic acid, undecane diacid, dodecane diacid, terephthalic acid, isophthalic acid and the like. From the viewpoint of suppressing aggregation during particle formation, monocarboxylic acids that are monofunctional terminal adjusters are more preferred, and from the viewpoint of suppressing disappearance of monocarboxylic acids even at high temperatures during polymerization, hexanoic acid, heptanoic acid, octanoic acid, nonanoic acid, decanoic acid, lauric acid, myristic acid, palmitic acid, margaric acid, stearic acid, oleic acid, linoleic acid, linolenic acid, citric acid, benzoic acid, and benzoic acid derivatives are particularly preferred.

The terminal adjuster content of the polymer particles is calculated by adding the polymer particles into a solvent which does not dissolve the polymer particles but dissolves only the terminal adjuster and stirring it, and then measuring the weight of the terminal adjuster extracted into the solvent.

In the present invention, the content of the terminal adjuster is more than 0 wt% and 0.2 wt% or less. The lower the content of the terminal adjuster, the easier it is to recover the residual particles after printing. The upper limit thereof is more preferably 0.15 wt% or less, further preferably 0.1 wt% or less, particularly preferably 0.05 wt% or less, and extremely preferably 0.02 wt% or less. The lower limit is more than 0 wt%, but is preferably 0.00001 wt% or more, and more preferably 0.0001 wt% or more.

In the present invention, the change rate between molecular weights of the polyamide constituting the polymer particle before and after being heated when the polymer particles are heated at a temperature of a melting point of the polyamide constituting the polymer particle - 5°C under a nitrogen atmosphere for 12 hours is preferably 0.7 or more and 1.4 or less. When the molecular weight change rate is close to 1, the change in molecular weight during printing can be suppressed, and when recycle printing is performed in a large-scale printing machine, the mechanical strength of the shaped article can be maintained even without mixing a large amount of virgin polymer particles and polymer particle composition. The upper limit of the molecular weight change rate is more preferably 1.2 or less, and further preferably 1.1 or less. The lower limit of the molecular weight change rate is more preferably 0.8 or more, and further preferably 0.9 or more.

The molecular weight change rate indicates a value calculated by dividing the weight average molecular weight of the polyamide which constitutes the polymer particles obtained after heating 5g of the polymer particles for 12 hours in a nitrogen atmosphere at a temperature of the melting point of the polyamide constituting the polymer particles - 5°C by the weight average molecular weight of the polyamide which constitutes the polymer particles before heating.

The melting point of the polyamide constituting the polymer particles of the present invention is determined as a peak top of an endothermic peak observed when it is heated from 30°C to a temperature higher by 30°C than the end of the melting peak at a rate of 20°C/min in a nitrogen atmosphere using a DSC method.

The weight average molecular weight of the polyamide constituting the polymer particles of the present invention indicates a weight average molecular weight converted a value measured by gel permeation chromatography using hexafluoro isopropanol as a solvent into that of polymethyl methacrylate.

The weight average molecular weight of the polyamide constituting the polymer particles of the present invention is preferably 1,000 g/mol or more and 100,000 g/mol or less. The smaller the weight average molecular weight, the lower the melt viscosity and the higher the mechanical strength. The upper limit of the weight average molecular weight is more preferably 90,000 or less, further preferably 80,000 or less, particularly preferably 70,000 or less, and extremely preferably 60,000 or less. If the weight average molecular weight is too small, the inherent properties of the polymer are not exhibited and the mechanical strength decreases. The lower limit of the weight average molecular weight is more preferably 10,000 or more, and further preferably 20,000 or more.

The BET specific surface area of the polymer particles of the present invention is preferably 0.05 $m^2/g$ or more and 1 $m^2/g$ or less. If the BET specific surface area is small, the particle surface is less likely to deteriorate during printing, and when recycle printing is performed using a large-scale printing machine, the surface smoothness and mechanical strength of the shaped article can be maintained even without mixing a large amount of virgin polymer particles and polymer particle composition. The upper limit of the BET specific surface area is more preferably 0.9 $m^2/g$ or less, further preferably 0.8 $m^2/g$ or less, particularly preferably 0.7 $m^2/g$ or less, and extremely preferably 0.6 $m^2/g$ or less. Theoretically, the lower limit of the BET specific surface area depends upon the particle diameter, and becomes 0.05 $m^2/g$ when the particle diameter is 100 $\mu m$, and 0.1 $m^2/g$ when the particle diameter is 50 $\mu m$. Therefore, if the BET specific surface area is small, the particle diameter becomes large and the surface smoothness of the shaped article becomes poor. Therefore, the lower limit of the BET specific surface area is more preferably 0.07 $m^2/g$ or more, and further preferably 0.09 $m^2/g$ or more.

Where, the BET specific surface area is measured in accordance with the Japanese Industrial Standards (JIS) R 1626 (1996) "Method of measuring specific surface area by gas adsorption BET method."

The polymer particles of the present invention are constituted from polyamides having an amide group-containing structure. As concrete examples of such polyamides, exemplified are polycaproamide (polyamide 6), polyhexamethylene adipamide (polyamide 66), polyhexamethylene terephthalamide (polyamide 6T), polyhexamethylene sebacamide (polyamide 610), polyhexamethylene dodecamide (polyamide 612), polydecamethylene adipamide (polyamide 106), polydodecamethylene adipamide (polyamide 126), polyamide 4, polytetramethylene adipamide (polyamide 46), polytetramethylene sebacamide (polyamide 410), polypentamethylene adipamide (polyamide 56), polypentamethylene sebacamide (polyamide 510), polynonane amide (polyamide 9), polydecamethylene terephthalamide (polyamide 10T), polydecamethylene sebacamide (polyamide 1010), polydecamethylene dodecamide (polyamide 1012), polyundecane amide (polyamide 11), polylauro amide (polyamide 12), polydodecamethylene dodecamide (polyamide 1212), polydodecamethylene terephthalamide (polyamide 12T), polycaproamide/polyhexamethylene adipamide copolymer (polyamide 6/66), or copolymers thereof, and the like. Among these, from the viewpoint of thermal resistance, polycaproamide (polyamide 6), polyhexamethylene adipamide (polyamide 66), polyhexamethylene terephthalamide (polyamide 6T), and polyhexamethylene sebacamide (polyamide 610) are more preferable, and polycaproamide (polyamide 6) and polyhexamethylene adipamide (polyamide 66) are particularly preferable.

The polyamide may be copolymerized within the range that does not impair the effects of the present invention. The copolymerizable component may be appropriately selected from elastomer components such as polyolefins and polyalkylene glycols that impart flexibility, and rigid aromatic components that improve heat resistance and strength.

The polymer particles of the present invention may contain a flow aid, and may be used for three-dimensional printing in the form of a polymer particle composition containing a flow aid. The flow aid is preferably dry blended with the polymer particles. In the present invention, the flow aid indicates a substance which suppresses aggregation of polymer particles due to the adhesive force between the polymer particles. By containing the flow aid, the flowability of the polymer particles can be improved, and the surface smoothness of the shaped article can be improved.

As such flow aids, for example, exemplified are silica (silicon dioxide) such as fused silica, crystalline silica, and amorphous silica; alumina such as alumina (aluminum oxide), alumina colloid (alumina sol), and alumina white; calcium carbonate such as light calcium carbonate, heavy calcium carbonate, finely divided calcium carbonate, and special calcium carbonate-based fillers; nepheline syenite fine powder; calcined clay such as montmorillonite and bentonite; clay (aluminum silicate powder) such as silane-modified clay; silicic acid-containing compounds such as talc, diatomaceous earth, and silica sand; crushed natural minerals such as pumice powder, pumice balloons, slate powder, and mica powder; minerals such as barium sulfate, lithopone, calcium sulfate, molybdenum disulfide, and graphite; glass-based fillers such as glass fibers, glass beads, glass flakes, and foamed glass beads; fly ash spheres, volcanic glass hollow bodies, synthetic inorganic hollow bodies, single crystal potassium titanate, carbon fibers, carbon nanotubes, carbon hollow spheres, fullerenes, anthracite powder, artificial cryolite, titanium oxide, magnesium oxide, basic magnesium carbonate, dolomite, potassium titanate, calcium sulfite, mica, asbestos, calcium silicate, molybdenum sulfide, boron fibers, silicon carbide fibers, and the like. More preferably, silica, alumina, calcium carbonate powder, glass-based fillers, and titanium oxide are exemplified. Particularly preferably, silica is exemplified.

As commercially available products of such a silica, exemplified are the fumed silica "AEROSIL" (registered trademark) series supplied by NIPPON AEROSIL Co., Ltd., the dry silica "REOLOSIL" (registered trademark) series supplied by Tokuyama Corporation, the sol-gel silica powder X-24 series supplied by Shin-Etsu Chemical Co., Ltd., and the like.

The compounding amount of such a flow aid is preferably 0.01 part by weight or more and 5 parts by weight or less with respect to 100 parts by weight of the polymer particles. The upper limit of the compounding amount is preferably 4 parts by weight or less, more preferably 3 parts by weight or less, further preferably 2 parts by weight or less, and particularly preferably 1 part by weight or less. The lower limit of the compounding amount is preferably 0.02 part by weight or more, more preferably 0.03 part by weight or more, further preferably 0.05 part by weight or more, and particularly preferably 0.1 part by weight or more. If the compounding amount of the flow aid is less than 0.01 part by weight, the flowability is insufficient and the effect for improving surface smoothness is not exhibited. Further, if the compounding amount of the flow aid is more than 5 parts by weight, there is a possibility that a shaped article cannot be obtained because obstruction against sintering may occur due to the surface of the polymer particles covered with the flow aid.

The polymer particles of the present invention may contain an inorganic reinforcing material composed of an inorganic compound, and may be used for three-dimensional printing in the form of a polymer particle composition containing the inorganic reinforcing material. The inorganic reinforcing material may be dry-blended with the polymer particles or may be contained inside the polymer particles, but it is preferred that the inorganic reinforcing material is dry-blended in order to control the polymer particles in a spherical shape and improve the flowability.

As such inorganic reinforcing materials, for example, exemplified are glass-based fillers such as glass fibers, glass beads, glass flakes, and foamed glass beads; nepheline syenite fine powder; calcined clays such as montmorillonite and bentonite; clays (aluminum silicate powders) such as silane-modified clay; silicic acid-containing compounds such as talc, diatomaceous earth, and silica sand; crushed natural minerals such as pumice powder, pumice balloons, slate powder, and mica powder; minerals such as barium sulfate, lithopone, calcium sulfate, molybdenum disulfide, and graphite; silicas (silicon dioxides) such as fused silica, crystalline silica, and amorphous silica; alumina such as alumina (aluminum oxide), alumina colloids (aluminum sol), and alumina white; calcium carbonate such as light calcium carbonate, heavy calcium carbonate, finely powdered calcium carbonate, and special calcium carbonate-based fillers; fly ash spheres, volcanic glass hollow bodies, synthetic inorganic hollow bodies, potassium titanate monocrystal, potassium titanate fibers, carbon fibers, carbon nanotubes, carbon hollow spheres, fullerene, anthracite powder, cellulose nanofibers, artificial cryolite, titanium oxide, magnesium oxide, basic magnesium carbonate, dolomite, calcium sulfite, mica, asbestos, calcium silicate, molybdenum sulfide, boron fibers, and silicon carbide fibers, and the like. Glass-based fillers, minerals, and carbon fibers are preferred because they are hard and have a large effect for improving strength, and glass-based fillers are more preferred because they have narrow particle diameter distribution and fiber diameter distribution. These inorganic reinforcing materials can be used alone or in combination of two or more.

As examples of the glass-based fillers preferably used in the present invention, glass fibers, glass beads, glass flakes, and foamed glass beads can be exemplified.

For the purpose of improving the adhesion between the inorganic reinforcing material and the polymer particles, it is possible to use an inorganic reinforcing material which has been subjected to a surface treatment, as long as the effect of the present invention is not impaired. As examples of such a surface treatment, silane coupling agents such as amino silane, epoxy silane, and acrylic silane, can be exemplified. These surface treatment agents may be fixed on the surface of the inorganic reinforcing material by a coupling reaction , or may cover the surface of the inorganic reinforcing material. However, those fixed by a coupling reaction are preferred from the viewpoint in that they are difficult to be modified by heat, etc., in order to maintain the surface smoothness and mechanical strength of the shaped article when recycle printing is performed in a large-scale printing machine, even if a large amount of virgin polymer particles and polymer particle composition are not mixed.

The compounding amount of such an inorganic reinforcing material is preferably 10 parts by mass or more and 200 parts by mass or less with respect to 100 parts by mass of the polymer particles. The upper limit of the compounding amount is more preferably 150 parts by mass or less, further preferably 100 parts by mass or less, and particularly preferably 75 parts by mass or less, from the viewpoint of obtaining a shaped article with a good surface smoothness without deteriorating the flowability of the polymer particles. Further, the lower limit of the compounding amount is more preferably 15 parts by mass or more, further preferably 20 parts by mass or more, and particularly preferably 25 parts by mass or more, from the viewpoint of improving the mechanical properties of the shaped article.

The polymer particles (polymer particle composition) of the present invention may contain both the flow aid and the inorganic reinforcing material described above, each at the amount within the preferred ranges set forth above.

Further, the polymer particles (polymer particle composition) of the present invention may contain other additives. As other additives, for example, exemplified are antioxidants, thermal stabilizers, weathering agents, lubricants, pigments, dyes, plasticizers, antistatic agents, flame retardants, carbon black, titanium dioxide, etc. for improving the stability of the polymer particles,

The polymer particles and polymer particle composition of the present invention are useful materials when the polymer particles and polymer particle composition remaining after producing a three-dimensional shaped article by the powder bed fusion method and not forming the shaped article are recovered and reused for printing. Hereinafter, the method for producing a three-dimensional shaped article using the polymer particles and polymer particle composition of the present invention is exemplified with reference to Fig. 1.

In step (a),a stage 2 of a vessel 1 in which a shaped article is formed is lowered.

In step (b), a stage 4 of a vessel 3 (hereinafter, called also as a supply vessel) filled in advance with the polymer particles or polymer particle composition P to be supplied to the vessel 1 for forming the shaped article is raised by a height capable of supplying a sufficient amount of polymer particles or polymer particle composition P to fill the vessel 1 with a predetermined layering height. Then, a recoater 5 is moved from the left end of the supply vessel 3 to the right end of the vessel 1 in the figure, and the polymer particles or polymer particle composition P is layered in the vessel 1. Where, the direction parallel to the movement direction of the recoater 5 is X direction, and the direction perpendicular to the movement direction of the recoater 5 on the powder surface of the polymer particles or polymer particle composition P is Y direction. Symbol 7 indicates a coordinate system representing the X direction, the Y direction, and the Z direction. Symbol 8 indicates the plane direction in which the polymer particles or polymer particle composition is layered, and symbol 9 indicates the height direction in which the polymer particles or polymer particle composition is layered.

In step (c), a thermal energy 6 capable of melting the polymer particles or polymer particle composition P filled in the vessel 1 at a predetermined layering height in the step (b) is applied, and the polymer particles or polymer particle composition P is selectively melted and sintered in accordance with the printing data.

In the powder bed fusion method, the above steps (a) to (c) are repeated to obtain a three-dimensional shaped article 10.

In step (d), the polymer particles and polymer particle composition 11 which have not become the three-dimensional shaped article 10 and remain in the vessel 1 are separated and recovered.

When carrying out recycle printing, the polymer particles and polymer particle composition 11 recovered in the step (d) are treated as polymer particles or polymer particle composition P, and the steps (a) to (c) are carried out again. At this time, virgin polymer particles and polymer particle composition not used for printing can be added to the remaining polymer particles and polymer particle composition 11 which have not became the shaped article, and recycle printing can be carried out. From the viewpoint of reducing waste particles, the weight ratio of the remaining polymer particles and polymer particle composition to the virgin polymer particles and polymer particle composition is preferably 70/30 or more, more preferably 80/20 or more, further preferably 90/10 or more, particularly preferably 95/5 or more, and extremely preferably 100/0.

As the method for selectively melting and sintering in the step (c), for example, a selective laser sintering or the like can be exemplified, which irradiates a laser onto a shape corresponding to the cross-sectional shape of the shaped article to bond polymer particles or polymer particle composition. Further, a selective absorption (or inhibition) sintering or the like can also be exemplified, which has a printing step for printing an energy absorption accelerator or an energy absorption inhibitor onto a shape corresponding to the cross-sectional shape of an object to be molded, and which bonds resin powder using an electromagnetic radiation.

The laser ray used in the selective laser sintering is not particularly limited as long as it does not impair the quality of the polymer particles or polymer particle composition or shaped article. For example, carbon dioxide gas laser, YAG laser, excimer laser, He-Cd laser, semiconductor excited solid-state laser, etc. are exemplified. Among these, carbon dioxide gas laser is preferred because it is easy to operate and control.

Further, the electromagnetic radiation used in the selective absorption (inhibition) sintering may be any radiation that does not impair the quality of the polymer particles or polymer particle composition or shaped article, but infrared radiation is preferred because it is relatively inexpensive and provides energy suitable for printing. Further, the electromagnetic radiation may or may not be coherent.

The energy absorption accelerator is a substance which absorbs an electromagnetic radiation. As such a substance, exemplified are carbon black, carbon fiber, copper hydroxy phosphate, near infrared absorbing dyes, near infrared absorbing pigments, metal nanoparticles, polythiophene, poly(p-phenylene sulfide), polyaniline, poly(pyrrole), polyacetylene, poly(p-phenylene vinylene), polyparaphenylene, poly(styrene sulfonate), poly(3,4-ethylenedioxythiophene)-poly(styrene phosphonate) p-diethyl amino benzaldehyde diphenyl hydrazone, and conjugated polymers consisting of combinations thereof, which may be used alone or in combination.

The energy absorption inhibitor is a substance which hardly absorbs an electromagnetic radiation. As such a substance, exemplified are a substance which reflects an electromagnetic radiation, such as titanium, thermal insulating powders, such as mica powder and ceramic powder, water, and the like, which may be used alone or in combination.

These selective absorption accelerators or selective absorption inhibitors may be used alone or in combination.

In the step for printing the selective absorption accelerator or the selective absorption inhibitor in a shape corresponding to the cross-sectional shape of the object to be shaped, a known method such as inkjet printing can be used. In this case, the selective absorption accelerator or the selective absorption inhibitor may be used as it is, or may be dispersed or dissolved in a solvent.

The large-scale printing machine in the present invention is a printing device with a work size of 0.01 m³ or more. For example, RaFaEl II 300 (supplied by Aspect Inc.) and RaFaEl II 550 (supplied by Aspect Inc.) are exemplified. The printing time when using these large-scale printing machines depends upon the amount of polymer particles and polymer particle composition to be filled, but generally requires 12 hours or more to obtain many shaped articles in one printing. Therefore, the polymer particles and polymer particle composition are exposed to a temperature slightly lower than the melting point for a long time and deteriorate.

The effects of the polymer particles and polymer particle composition of the present invention are that the surface smoothness and mechanical strength of the shaped article can be maintained even without mixing a large amount of virgin polymer particles and polymer particle composition when recycle printing is performed using a large-scale printing machine that takes a long time to print, and that the recovery property of residual particles is excellent. The indicators thereof can be evaluated by the rate of change in the surface smoothness of the three-dimensional shaped article when recycle printing is performed, the rate of change in the mechanical strength of the three-dimensional shaped article when recycle printing is performed, and the recovery rate of the polymer particles or polymer particle composition remaining after three-dimensional printing.

The change rate of the surface smoothness of the three-dimensional shaped article when recycle printing is performed in the present invention can be calculated by dividing the surface roughness of a shaped article obtained when recycle printing is performed with a weight ratio of the remaining polymer particles and polymer particle composition to the virgin polymer particles and polymer particle composition of 80/20, by the surface roughness of a shaped article obtained when shaped using only the virgin polymer particles and polymer particle composition.

The(change rate of the surface smoothness of the three-dimensional shaped article ((change rate of the surface roughness of the shaped article) when recycle printing is performed is preferably 0.8 or more and 1.2 or less. The closer the change rate is to 1, the more it is indicated that the surface smoothness can be maintained even in recycle printing, and the upper limit is more preferably 1.15 or less, and further preferably 1.1 or less. The lower limit is more preferably 0.85 or more, and further preferably 0.9 or more.

Where, the surface roughness of the shaped article is determined as a value by observing the surface of the shaped article with an optical microscope, creating a 3D image of the unevenness of the shaped article surface in an automatic synthesis mode, obtaining a cross-sectional height profile over a length of 1 mm or more, and calculating the surface roughness Ra (center line average roughness) by the arithmetic average.

The surface roughness of the three-dimensional shaped article of the present invention is a smooth surface of 15 $\mu$m or less due to the effect of the spherical shape of the polymer powder. Since the smaller the surface roughness, the higher the quality, it is preferably 10 $\mu$m or less, and more preferably 5 $\mu$m or less. Further, the lower limit thereof is not particularly limited, and a small value is preferable, but the lower limit is usually 1 $\mu$m.

The change rate of the mechanical strength of a three-dimensional shaped article when recycle printing is performed in the present invention can be calculated by dividing the flexural strength of a shaped article obtained when recycle printing is performed with a weight ratio of the remaining polymer particles and polymer particle composition to the virgin polymer particles and polymer particle composition of 80/20 , by the flexural strength of a shaped article obtained when shaped using only the virgin polymer particles and polymer particle composition.

The change rate of the mechanical strength of a three-dimensional shaped article when recycle printing is performed is preferably 0.8 or more and 1.2 or less. The closer the change rate is to 1, the more it is indicated that the mechanical strength can be maintained even in recycle printing, and the upper limit is more preferably 1.15 or less, and further preferably 1.1 or less. The lower limit is more preferably 0.85 or more, and further preferably 0.9 or more.

The flexural strength of the shaped article is the maximum flexural stress value measured in accordance with the Japanese Industrial Standards (JIS) K7171 (2016) "Plastics - Determination of bending properties".

The recovery rate of the polymer particles or polymer particle composition remaining after three-dimensional printing is evaluated as follows. 100 g of the polymer particles or polymer particle composition remaining after three-dimensional printing is sampled, the weight of the polymer particles or polymer particle composition which passed through a 500 $\mu$m sieve is measured, and the rate of the weight of the polymer particles or polymer particle composition which passed through the sieve to the weight of the charged polymer particles or polymer particle composition is calculated. This rate is defined as the recovery rate.

In the present invention, the recovery rate of the polymer particles or polymer particle composition remaining after three-dimensional printing is preferably 30 wt% or more. The higher the recovery rate, the easier the remaining polymer particles can be recovered. The lower limit is more preferably 40 wt% or more. The upper limit value is 100 wt%.

The size of each independent hole observed as a void when the three-dimensional shaped article of the present invention is imaged by X-ray CT can be expressed as a sphere equivalent diameter. The three-dimensional shaped article of the present invention is characterized in that the average sphere equivalent diameter of the voids observed by X-ray CT imaging is 1 $\mu$m or more and 100 $\mu$m or less. In case of melt molding not using a three-dimensional printing process, the average sphere equivalent diameter of the voids is usually designed to be less than 1 $\mu$m, and in case of intentionally forming voids such as foam molding, the average sphere equivalent diameter of the voids usually exceeds 100 $\mu$m, and therefore, it is a characteristic of the three-dimensional shaped article that the average sphere equivalent diameter becomes 1 $\mu$m or more and 100 $\mu$m or less. As described above, in a three-dimensional printing under normal pressure, because a certain amount of voids are generated, the lower limit thereof is preferably 3 $\mu$m or more, more preferably 5 $\mu$m or more, and further preferably 10 $\mu$m or more. The upper limit thereof is preferably 80 $\mu$m or less, more preferably 60 $\mu$m or less, and further preferably 50 $\mu$m or less, since large voids become defects and cause a decrease in the strength of a shaped article.

The ratio of the terminal carboxyl group amount to the terminal amino group amount in the polyamide constituting the three-dimensional shaped article of the present invention is characterized in that it is 0.01 or more and 0.8 or less. The smaller the ratio of the terminal carboxyl group amount to the terminal amino group amount, the better the storage stability of the shaped article. The upper limit thereof is preferably 0.8 or less, more preferably 0.6 or less, further preferably 0.4 or less, particularly preferably 0.2 or less, and extremely preferably 0.1 or less. If the ratio of the terminal carboxyl group amount to the terminal amino group amount is too small, the mechanical strength of the shaped article decreases. The lower limit thereof is more preferably 0.02 or more, and further preferably 0.04 or more.

The amount of the terminal carboxyl groups in the polyamide constituting the three-dimensional shaped article is determined by dissolving the three-dimensional shaped article in benzyl alcohol and then performing neutralization titration with a potassium hydroxide ethanol solution, and the amount of the terminal amino groups in the three-dimensional shaped article is determined by dissolving the polymer particles in P.E.A (phenol-ethanol solvent) and then performing neutralization titration with a hydrochloric acid aqueous solution.

The terminal adjuster content of the three-dimensional shaped article in the present invention is a weight percent concentration of the terminal adjuster contained in the polyamide constituting the three-dimensional shaped article and remaining unreacted with the polyamide.

The terminal adjuster content of the three-dimensional shaped article is calculated by adding the three-dimensional shaped article to a solvent that does not dissolve the polymer but dissolves only the terminal adjuster, stirring the mixture, and measuring the weight of the terminal adjuster extracted into the solvent.

**In** the present invention, the terminal adjuster content of the three-dimensional shaped article is more than 0 wt% and 0.15 wt% or less. Since the more the terminal adjuster content, the worse the mechanical properties of the shaped article become and the more the three- dimensional shaped article becomes colored, the upper limit thereof is more preferably 0.1 wt% or less, further preferably 0.07 wt% or less, particularly preferably 0.05 wt% or less, and extremely preferably 0.02 wt% or less. The lower limit thereof is more than 0 wt%, but is preferably 0.00001 wt% or more, and more preferably 0.0001 wt% or more.

The polymer particles of the present invention can be produced by referring to, but not limited to, a method disclosed in International Publication WO2022/181634 previously disclosed by the present inventors, in which the polyamide monomer (a) of the present application is polymerized by adding a terminal adjuster (C) in the presence of a polymer (B) incompatible with a polyamide to be obtained to obtain polymer particles (A) comprising the polyamide. However, in the method described in International Publication WO2022/181634, the terminal adjuster content of the polymer particles (A) exceeds 0.2 wt%. Therefore, in order to obtain the polymer particles of the present invention, it is necessary to separately reduce the terminal adjuster content of the polymer particles (A) by heating, washing, etc.

Further, the polymer particles of the present invention can be produced by using the following production method. By using the following production method, the polymer particles of the present invention can be obtained without the heating and washing steps of the polymer particles for reducing the terminal adjuster content described above. The production method is a method of producing polymer particles by polymerizing polyamide monomer (a) in the presence of polymer (B) and terminal adjuster (C), wherein the polyamide monomer (a) is uniformly dissolved in the polymer (B) at the start of polymerization, and polymer particles (A) are precipitated after polymerization, characterized in that the solubility parameters $\delta_A$, $\delta_B$, and $\delta_C$ of the polyamide constituting polymer particles (A), the polymer (B), and the terminal adjuster (C) satisfy the relationship $2 \leq (\delta_B - \delta_C)^2 - (\delta_A - \delta_C)^2 \leq 50$ [(J/cm$^3$)], and the compounding amount of the terminal adjuster (C) is 0.001 mol % or more and 4.0 mol % or less.

By using such a method, it is possible to obtain polymer particles for producing a three-dimensional shaped article by the powder bed fusion method of the present invention, the polymer particles having a sphericity of 80 or more, an average particle diameter of 1 $\mu$m or more and 100 $\mu$m or less, a ratio of the terminal carboxyl group amount to the terminal amino group amount of the polyamide constituting the polymer particles being 0.01 or more and 0.8 or less, and a terminal adjuster content of the polymer particles being more than 0 wt% and less than 0.2 wt%.

In the present invention, the polyamide monomer (a) is polymerized to become a polyamide. As such a polyamide monomer, exemplified are mixtures selected from amino acids such as amino hexanoic acid, amino undecanoic acid, amino dodecanoic acid, paramethyl benzoic acid, and 4-aminobutyric acid, lactams such as caprolactam, laurolactam, and 2-pyrrolidone, and dicarboxylic acids such as adipic acid, azelaic acid, sebacic acid, undecane dioic acid, dodecane dioic acid, terephthalic acid, and isophthalic acid; and diamines such as hexamethylene diamine, nonamethylene diamine, decane diamine, undecane diamine, dodecane diamine, 1,4-diaminobutane, and pentamethylene diamine, and salts thereof. Two or more of these polyamide monomers may be used, and other copolymerizable components may be included, as long as they do not impair the present invention. From the viewpoint of obtaining polyamides having thermal properties suitable for printing, mixtures selected from amino acids such as amino undecanoic acid and amino dodecanoic acid, lactams such as laurolactam, and dicarboxylic acids such as sebacic acid, undecane dioic acid and dodecane dioic acid; and diamines such as decane diamine, undecane diamine and dodecane diamine, and salts thereof are preferred.

The polymer (B) is a polymer which dissolves in the polyamide monomer (a) at the start of polymerization, but is incompatible with the polyamide after polymerization. From the viewpoint of making the resulting polymer particles fine, and from the viewpoint of having a high solubility in the monomer (a) and narrowing the particle size distribution, it is preferred that the polymer (B) is incompatible with the polyamide but has a high affinity. In other words, the affinity between monomer (a)/polymer (B) and between polymer (B)/polyamides constituting polymer particles (A) can be expressed, when the respective solubility parameters (hereinafter referred to as SP values) are referred to as $\delta_a$, $\delta_B$ and $\delta_A$ ($J^{1/2}/cm^{3/2}$), as the square of the difference in solubility parameters between the monomer (a) and the polymer (B), i.e. $(\delta_a - \delta_B)^2$, and as the square of the difference in solubility parameters between the polymer (B) and the polyamides constituting the polymer particles (A), i.e. $(\delta_A - \delta_B)^2$. The closer to zero, the higher the affinity and the easier it is to dissolve or mix, but since $\delta_a$ and $\delta_A$ of the polyamides constituting the monomer (a) and the polymer particles (A) are different from each other, from the viewpoint of preventing the polyamides from forming aggregates and preventing the polymer (B) from dissolving in the monomer (a) and forming aggregates, it is preferred that the value of $(\delta_a - \delta_B)^2$ satisfies within the range of 0.1 to 25. The lower limit of $(\delta_a - \delta_B)^2$ is more preferably 0.3 or more, further preferably 0.5 or more, and particularly preferably 1 or more. The upper limit of $(\delta_a - \delta_B)^2$ is more preferably 16 or less, further preferably 12 or less, particularly preferably 10 or less, and most preferably 7 or less. On the other hand, from the viewpoint of preventing the polymer (B) from being uniformly mixed and failing to obtain polymer particles, and from the viewpoint of preventing the polyamide from forming aggregates due to incompatibility, it is preferred that the value of $(\delta_A - \delta_B)^2$ satisfies within the range of 0.1 to 16. The lower limit of $(\delta_A - \delta_B)^2$ is more preferably 0.3 or more, further preferably 0.5 or more, and particularly preferably 1 or more. The upper limit of $(\delta_A - \delta_B)^2$ is more preferably 12 or less, further preferably 10 or less, particularly preferably 7 or less, and most preferably 4 or less.

Where, the SP value is indicated as a value calculated from the cohesive energy density and molar volume of Hoftyzer-Van Krevelen described in Properties of Polymers 4th Edition (written by D.W. Van Krevelen, published by Elsevier Science in 2009), Chapter 7, p. 215. If the calculation cannot be performed using this method, it is indicated as a value calculated from the cohesive energy density and molar volume of Fedors described in the same chapter, p. 195. In addition, when two or more kinds of polyamide monomer (a), polymer (B) or terminal adjuster (C) are used, it is indicated as a value added with the product of each SP value and molar fraction.

As concrete examples of the polymer (B) preferably used in the method for producing polymer particles of the present invention. exemplified are polyethylene glycol, polypropylene glycol, polytetramethylene glycol, polypentamethylene glycol, polyhexamethylene glycol, polyethylene glycol-polypropylene glycol copolymer, polyethylene glycol-polytetramethylene glycol copolymer, alkyl ethers in which the hydroxyl groups at one or both ends are blocked with methyl, ethyl, propyl, isopropyl, butyl, hexyl, octyl, decyl, dodecyl, hexadecyl or octadecyl group, etc., and alkyl phenyl ethers in which the hydroxyl groups are blocked with octylphenyl group, etc. **In** particular, polyethylene glycol, polyethylene glycol-polypropylene glycol copolymer, polypropylene glycol, polytetramethylene glycol, and alkyl ethers thereof are preferred because they are excellent in compatibility with polyamide monomer (a) and the particle size distribution of the obtained polymer particles is narrow, and polyethylene glycol and polyethylene glycol-polypropylene glycol copolymers are more preferred from the viewpoint of excellent compatibility with water used as a solvent and ring-opening polymerization by hydrolysis of polyamide monomer (a), and polyethylene glycol is most preferred. Two or more of these may be used simultaneously as long as the effect of the present invention is not impaired.

The terminal adjuster (C) is a compound which reacts with the terminal amino group or terminal carboxyl group of the polyamide during polymerization to adjust the amount of the terminal amino group or terminal carboxyl group of the polyamide. By using polymer particles with an adjusted amount of terminal amino group or terminal carboxyl group of the polyamide, the increase in molecular weight of polyamide can be suppressed during recycle printing in a large-scale printing machine, and the surface smoothness and mechanical strength of the shaped article can be maintained.

The terminal adjuster (C) in the present invention is a compound which reacts with the terminal amino group or terminal carboxyl group of the polyamide to adjust the amount of the terminal amino group or terminal carboxyl group of the polyamide.

The terminal adjuster to be used depends on the kind of the polyamide monomer constituting the polymer particles. In case where dicarboxylic acids or diamines are the polyamide monomers, monofunctional compounds are used as the terminal adjuster, and in case where amino acids or lactams are the polyamide monomers, difunctional compounds can also be used other than monofunctional compounds.

As the monofunctional terminal adjuster, monoamines and monocarboxylic acids are exemplified. As concrete examples of the monoamines, exemplified are hexyl amine, octyl amine, dodecyl amine, hexadecyl amine, stearyl amine, aniline, aniline derivatives, benzyl amine, phenethyl amine and the like, and as concrete examples of the monocarboxylic acids, exemplified are methanoic acid, acetic acid, propionic acid, butyl acid, pentanoic acid, hexanoic acid, heptanoic acid, octanoic acid, nonanoic acid, decanoic acid, lauric acid, myristic acid, palmitic acid, margaric acid, stearic acid, oleic acid, linoleic acid, linolenic acid, lactic acid, malic acid, citric acid, benzoic acid, benzoic acid derivatives and the like. As the difunctional terminal adjuster, diamines and dicarboxylic acids are exemplified. As concrete examples of the diamines, exemplified are hexamethylene diamine, nonamethylene diamine, decane diamine, undecane diamine, dodecane diamine, and phenylene diamines and the like, and as concrete examples of the dicarboxylic acids, exemplified are adipic acid, azelaic acid, sebacic acid, undecane dioic acid, dodecanedioic acid, terephthalic acid, isophthalic acid and the like. From the viewpoint of suppressing aggregation during particle formation, monocarboxylic acids which are monofunctional terminal adjusters are more preferred, and from the viewpoint of suppressing disappearance of monocarboxylic acids even under a high temperature condition during polymerization, hexanoic acid, heptanoic acid, octanoic acid, nonanoic acid, decanoic acid, lauric acid, myristic acid, palmitic acid, margaric acid, stearic acid, oleic acid, linoleic acid, linolenic acid, citric acid, benzoic acid, and benzoic acid derivatives are particularly preferred.

Furthermore, by selecting a terminal adjuster (C) such that the relationship between the solubility parameters of the polyamide, the polymer (B) and the terminal adjuster (C) constituting the polymer particles (A) satisfies $2 \leq (\delta_B - \delta_C)^2 - (\delta_A - \delta_C)^2 \leq 50 \ [(J/cm^3)]$, the content of the terminal adjuster contained in the polymer particles (A) can be reduced.

Here, $(\delta_A - \delta_C)^2$ and $(\delta_B - \delta_C)^2$ indicate the affinity between respective components. $(\delta_A - \delta_C)^2$ indicates the affinity between the polyamide constituting the polymer particles (A) and the terminal adjuster ( C ) , and $(\delta_B - \delta_C)^2$ indicates the affinity between the polymer (B) and the terminal adjuster (C). It is shown that the closer to zero $(\delta_A - \delta_C)^2$ is, the more easily the terminal adjuster (C) is compatible with the polyamide constituting the polymer particles (A), and the closer to zero $(\delta_B - \delta_C)^2$ is, the more easily the terminal adjuster (C) is compatible with the polymer (B). The lower limit of $(\delta_B - \delta_C)^2 - (\delta_A - \delta_C)^2$ is preferably 2 or more, more preferably 5 or more, further preferably 10 or more, and particularly preferably 15 or more. The upper limit of $(\delta_B - \delta_C)^2 - (\delta_A - \delta_C)^2$ is preferably 45 or less, more preferably 40 or less, further preferably 35 or less, and particularly preferably 30 or less, in order to suppress aggregation of the terminal adjuster (C).

The amount of the terminal adjuster is preferably 0.001 mol% or more and 4.0 mol% or less with respect to the total substance amount of the polyamide monomer added. If the amount of the added substance is more than 4.0 mol%, the polyamide cannot be made into a high molecular weight, and the mechanical strength is reduced, which is not preferable. The upper limit of the substance amount of the terminal adjuster is more preferably 2.0 mol% or less, and further preferably 1.0 mol% or less, with respect to the total substance amount of the polyamide monomer added. If the substance amount of the terminal adjuster is less than 0.001 mol%, it is necessary to add an excess amount of virgin polymer particles and polymer particle composition to maintain the surface smoothness and mechanical strength of the shaped article when recycle printing with a large-scale printing machine. The lower limit of the substance amount of the terminal adjuster is more preferably 0.005 mol% or more, and further preferably 0.01 mol% or more with respect to the total substance amount of the polyamide monomer added.

A known method can be used to polymerize a polyamide monomer into a polyamide. As the method, although depending upon the kind of the polyamide monomer, for example, in case of mixtures of amino acids, dicarboxylic acids and diamines, or salts thereof, polycondensation reaction can be used. Further, in case of lactams, anionic ring-opening polymerization using alkali metals such as sodium and potassium, or organometallic compounds such as butyl lithium and butyl magnesium as initiators, cationic ring-opening polymerization using acids as initiators, and hydrolysis-type ring-opening polymerization using water or the like are generally used. From the viewpoint of wastewater treatment, hydrolysis-type ring-opening polymerization is more preferred.

Further, in order to control the ratio of the terminal carboxyl group amount to the terminal amino group amount of the polyamide constituting the polymer particles to be 0.01 or more and 0.8 or less, in addition to the above-described method using the terminal adjuster (C), exemplified is a method in which, when polymer particles are produced using dicarboxylic acids and diamines as polyamide monomer (a) in the presence of polymer (B), the carboxylic acids and diamines are polymerized at unequal amounts.

When the dicarboxylic acids and diamines are polymerized at unequal amounts, the substance amount of either the dicarboxylic acids or the diamines becomes excessive. When an amount obtained by subtracting the smaller amount from the larger amount is referred to as the difference, the difference is preferably 0.001 mol% or more and 4.0 mol% or less with respect to the dicarboxylic acids or the diamines with the smaller substance amount. If the substance amount to be added is more than 4.0 mol%, the polyamide cannot be made into a high molecular weight, and the mechanical strength is reduced, which is not preferred. The upper limit of the difference is more preferably 2.0 mol% or less, and further preferably 1.0 mol% or less. If the difference is less than 0.001 mol%, it is necessary to add an excessive amount of virgin polymer particles and polymer particle composition in order to maintain the surface smoothness and mechanical strength of the shaped article when recycle printing with a large-scale printing machine. The lower limit of the difference is more preferably 0.005 mol% or more, and further preferably 0.01 mol% or more.

Further, from the viewpoint of capable of suppressing aggregation during particle formation and from the viewpoint that the amount of terminal amino groups in the polyamide constituting the polymer particles is more susceptible to oxidation than the amount of terminal carboxyl groups, it is preferred to carry out the polymerization under a condition of an excess of dicarboxylic acid.

In the method for producing a polymer particle, a polymerization accelerator may be added within a range that does not impair the effects of the present invention. As the accelerator, known ones can be used, and for example, can be exemplified inorganic phosphorus compounds such as phosphoric acid, phosphorous acid, hypophosphorous acid, pyrophosphoric acid, polyphosphoric acid, boric acid, and their alkali metal salts and alkaline earth metal salts. Two or more of these may be used. The amount of the accelerator to be added can be selected appropriately, but it is preferred to add 1 part by mass or less with respect to 100 parts by mass of polyamide monomer.

As the method for isolating the polymer particles from the mixture of the polymer particles after the polymerization is completed and the resulting polymer which is incompatible with polyamide, exemplified is a method for discharging the mixture obtained at the end of the polymerization into a poor solvent for the polymer particles and then isolating the polymer particles, or a method for adding the poor solvent for the polymer particles to the reaction vessel and then isolating the polymer particles. From the viewpoint of preventing the polymer particles from melting and coalescing with each other, which would increase the particle size distribution index, preferred is a method for, after cooling the mixture to the melting point of the polymer particles or lower, more preferably the crystallization temperature or lower, discharging the mixture into a poor solvent for the polymer particles and isolating the polymer particles, or adding the poor solvent for the polymer particles to the reaction vessel and isolating the polymer particles, and the method for adding the poor solvent for the polymer particles to the reaction vessel and isolating the polymer particles is more preferred. As the isolation method, a known method such as reduced pressure or pressure filtration, decantation, centrifugation, spray drying, etc. can be appropriately selected.

The poor solvent for the polymer particles is preferably a solvent which does not dissolve the polymer, and further dissolves the polyamide monomer and the polymer that is incompatible with the resulting polyamide. Such a solvent can be appropriately selected, but exemplified are alcohols such as methanol, ethanol and isopropanol, and water, and water is preferred from the viewpoint of preventing the generation of voids in the shaped article originating from an organic solvent.

The washing, isolation and drying of the polymer particles can be carried out by known methods. As the washing method for removing adhesions and inclusions from the polymer particles, reslurry washing can be used, and heating may be used as appropriate. There are no limitations on the solvent used for the washing, as long as it does not dissolve the polymer particles but dissolves the polyamide monomer and the polymer incompatible with the obtained polyamide, and water is preferred from the viewpoint of economy. The isolation can be appropriately selected from reduced pressure, pressure filtration, decantation, centrifugation, spray drying, etc. By the washing and isolation, the polymer incompatible with the obtained polyamide is removed until it becomes less than 0.001 mass% relative to the polymer particles. The drying is preferably carried out at the melting point of the polymer particles or lower and may be carried out under reduced pressure. Air drying, hot air drying, heat drying, reduced pressure drying, freeze drying, etc. are selected.

As the method for heating and washing the obtained polymer particles (A) to reduce the terminal adjuster content, exemplified are a method for heating the polymer particles (A) in a nitrogen atmosphere at a temperature of the melting point - 5°C until the terminal adjuster content becomes 0.2 wt% or less, and a method for reslurry washing using a solvent which does not dissolve the polymer particles (A) but dissolves the terminal adjuster (C).

Examples

The present invention will be explained hereinafter based on examples, but the present invention is not limited thereto.

(1) Sphericity of polymer particles:

The sphericity of polymer particles was calculated from the minor and major axes of 30 randomly selected particles observed in a photograph taken with a scanning electron microscope (JSM-6301NF, supplied by JEOL Ltd.) according to the following equation.

[Equation 2]

$$S = \left[ \sum_{i=1}^{n} (b/a) \right] \times 100/n$$

Where, in the above-described equation, S is sphericity, a is major axis, b is minor axis, and n is the number of measurements (30).

(2) Average particle diameter:

To a laser diffraction particle size distribution analyzer ( Microtrac MT3300EXII) supplied by Nikkiso Co., Ltd., a dispersion prepared in advance by dispersing about 100 mg of polymer particles, polymer particle composition with about 5 mL of deionized water was added until a measurable concentration was reached, and after ultrasonic dispersion was performed for 60 seconds at 30W in the analyzer, the average particle diameter was determined from the particle size distribution measured in a measurement time of 10 seconds. The average particle diameter indicates a D50 particle diameter, at which the cumulative frequency from the small particle diameter side becomes 50%. Where, the refractive index during measurement was 1.52, and the refractive index of the medium (deionized water) was 1.333.

(3) Content of polyamide constituting polymer particles, polymer particle composition, or three-dimensional shaped article:

The content of polyamide constituting the polymer particles, polymer particle composition, or three-dimensional shaped article was determined as a weight loss rate when 10 mg of the polymer particles, polymer particle composition, or three-dimensional shaped article was heated from 30°C to 500°C at a rate of 10 °C/min under a nitrogen atmosphere using an automatic thermogravimetric-differential thermal analysis equipment DTG-60 supplied by Shimadzu Corporation.

(4) Quantitative determination of terminal carboxyl group of polyamide constituting polymer particles, polymer particle composition, or three-dimensional shaped article:

0.5g of polymer particles, polymer particle composition, or three-dimensional shaped article was dissolved in 20 mL of benzyl alcohol and heated and dissolved at 190°C for 2 hours. After confirming dissolution, several drops of phenolphthalein indicator were added and titrated with 1/50N-KOH ethanol solution, the point at which the color turned red was determined as the terminal point, and it was calculated using the following equation.

[Equation 3]

$$COOH = \frac{1/50 \times (T - B) \times f \times 10^{-3}}{W \times C_A/100}$$

Where, in the above-described equation, COOH is the amount of terminal carboxyl group in the polyamide constituting the polymer particles, T is the titration amount (mL) of 1/50N-KOH ethanol solution, B is the titration amount (mL) of 1/50N-KOH ethanol solution required for the blank, f is the titer of the 1/50N-KOH ethanol solution, W is the weight (g) of the taken sample, and $C_A$ is the content (wt% ) of polyamide constituting the polymer particles, or polymer particle composition, or three-dimensional shaped article.

(5) Quantitative determination of terminal amino group of polyamide constituting polymer particles, polymer particle composition, or three-dimensional shaped article:

0.5g of polymer particles, polymer particle composition, or three-dimensional shaped article was dissolved in 25 mL of P.E.A (phenol-ethanol solvent). After confirming dissolution, several drops of thymol blue indicator were added, and titration was performed with 1/50N-HCl aqueous solution, the point at which the color turned light pink was determined as the terminal point, and it was calculated using the following equation.

[Equation 4]

$$NH_2 = \frac{1/50 \times (A - B) \times f \times 10^{-3}}{W \times C_A/100}$$

Where, in the above-described equation, $NH_2$ is the amount of terminal amino group of the polyamide constituting the polymer particles, A is the titration amount (mL) of 1/50N-HCl aqueous solution, B is the titration amount (mL) of 1/50N-HCl aqueous solution required for the blank, f is the titer of the 1/50N-HCl aqueous solution, W is the weight (g) of the taken sample, and $C_A$ is the content (wt% ) of polyamide constituting the polymer particles, polymer particle composition, or three-dimensional shaped article.

(6) Calculation of terminal adjuster content ($C_T$) of polymer particles, polymer particle composition, or three-dimensional shaped article:

Polymer particles, polymer particle composition, or three-dimensional shaped article was added to 10g of a solvent which did not dissolve polymer particles but dissolved only terminal adjuster so that the weight of the polyamide constituting these became 10g, and stirred, and the weight of the terminal adjuster extracted into the solvent was measured and it was calculated using the following equation.

[Equation 5]

$$C_T = \frac{W_T}{W \times C_A/100} \times 100$$

Where, in the above-described equation, $W_T$ is the weight of the terminal adjuster extracted into the solvent, W is the weight of the added polymer particles, polymer particle composition, or three-dimensional shaped article, and $C_A$ is the content of polyamide constituting the polymer particles, polymer particle composition, or three-dimensional shaped article.

(7) Weight average molecular weight of polyamide constituting polymer particles or polymer particle composition:

The weight average molecular weight of polyamide constituting the polymer particles or polymer particle composition was calculated by gel permeation chromatography in comparison with a calibration curve using polymethyl methacrylate. The measurement sample was prepared by dissolving about 3 mg of polymer particles in about 3g of hexafluoro isopropanol.

    Equipment: Waters e-Alliance GPC system
    Column: HFIP-806M $\times$ 2 supplied by Showa Denko K.K.
    Mobile phase: 5 mmol/L sodium trifluoro acetate/hexafluoro isopropanol
    Flow rate: 1.0ml/min
    Temperature: 30°C
    Detection: Differential refractometer

(8) Change rate in molecular weight of polyamide constituting polymer particles or polymer particle composition before and after heating:

5g of polymer particles or polymer particle composition was heated for 12 hours in a nitrogen atmosphere at a temperature of the melting point of the polyamide constituting the polymer particles or polymer particle composition - 5°C. A value obtained by dividing the weight average molecular weight of polyamide constituting the polymer particles or polymer particle composition after heating with the weight average molecular weight of polyamide constituting the polymer particles or polymer particle composition before heating is defined as the change rate in molecular weight.

(9) BET specific surface area of polymer particles or polymer particle composition:

In accordance with the Japanese Industrial Standards (JIS) JIS R1626 (1996) "Method for measuring specific surface area by gas adsorption BET method", using BELSORP-max supplied by BEL Japan Co., Ltd., about 0.2g of polymer particles were placed in a glass cell, and after degassing under reduced pressure at 80°C for about 5 hours, the krypton gas adsorption isotherm at a liquid nitrogen temperature was measured, and it was calculated by the BET method. When determining polymer particle composition, the specific gravity difference was utilized, and flow aids and inorganic reinforcing materials were removed before the measurement.

(10) Method for determining melting point of polyamide constituting polymer particles or polymer particle composition:

Using a differential scanning calorimeter (DSCQ20) supplied by TA Instruments Japan Inc., the peak top of the endothermic peak observed when heated in a nitrogen atmosphere from 30°C at a rate of 20°C/min to a temperature 30°C higher than that at the end of the melting peak was determined as the melting point.

(11) Surface roughness of three-dimensional shaped article:

For the surface roughness of three-dimensional shaped article, using a powder bed fusion method 3D printer (RaFaEIII300) supplied by Aspect Inc., the surface of the shaped article was observed at a magnification of 200 times using an optical microscope (VHX-5000) and an objective lens VH-ZST (ZS-20) supplied by KEYENCE Corporation. At that time, the unevenness of the shaped article surface was three-dimensionally imaged with an automatic synthesis mode using the software (system version 1.04) attached to the device, and then a cross-sectional height profile was obtained over a length of 1 mm or more, and the surface roughness Ra was calculated by the arithmetic average.

(12) Average sphere equivalent diameter of voids in three-dimensional shaped article:

The average sphere equivalent diameter of voids in the shaped article was calculated by observing a three-dimensional transmission image of a three-dimensional object using an X-ray CT device (Xradia 510 Versa) supplied by Carl Zeiss AG. Measurements were performed at a resolution of 5 $\mu$m, a field of view of 5 mm, a voltage of 80 kV, and a power of 7 W, the voids in the obtained observation image were label treated, and the sphere equivalent diameter, which is the diameter of each independent void when it is determined as a sphere, was calculated, and the average value thereof was determined as the average sphere equivalent diameter of the voids.

(13) Change rate in surface smoothness of three-dimensional shaped article when recycle printing:

The polymer particles or polymer particle composition remaining after three-dimensional printing was mixed with virgin polymer particles or polymer particle composition so that the weight ratio thereof became 80/20. Thereafter, the mixture was used as a raw material to prepare a test piece having a width of 10 mm, a length of 80 mm, and a thickness of 4 mm, using a powder bed fusion method 3D printer (RaFaEIII300) supplied by Aspect Inc., so that the length direction of 80 mm became the X direction. The change rate in surface smoothness was calculated by dividing the surface roughness of the test piece obtained when shaped using the mixture with the surface roughness of a test piece obtained when shaped using only the virgin polymer particles or polymer particle composition, and the change rate was evaluated according to the following criteria.

A: 0.9 or more and 1.1 or less
B: 0.8 or more and less than 0.9, or more than 1.1 and 1.2 or less
C: less than 0.8 or more than 1.2

(14) Measurement of flexural strength of shaped article:

The flexural strength of the three-dimensional shaped article was measured by preparing a test piece having a width of 10 mm, a length of 80 mm, and a thickness of 4 mm using a powder bed fusion method 3D printer (RaFaEIII300) supplied by Aspect Inc. so that the length direction of 80 mm became the X direction, and then measuring the flexural strength in the X direction of the test piece using a Tensilon universal tester (TENSIRON TRG-1250) supplied by A&D Co., Ltd. Where, a three-point bending test was performed in accordance with JIS K7171 (2016) under the conditions of a distance between fulcrums of 64 mm and a test speed of 2 mm/min, and the measured maximum flexural stress was determined as the flexural strength. The measurement temperature was room temperature (23°C), the number of measurements was n=5, and the average value thereof was determined.

(15) Change rate in mechanical strength of three-dimensional shaped article when recycle shaped:

The polymer particles or polymer particle composition remaining after three-dimensional printing was mixed with virgin polymer particles or polymer particle composition so that the weight ratio became 80/20. Thereafter, the mixture was used as a raw material to prepare a test piece having a width of 10 mm, a length of 80 mm, and a thickness of 4 mm using a powder bed fusion method 3D printer (RaFaEllI300) supplied by Aspect Inc., so that the length direction of 80 mm became the X direction. The change rate of the mechanical strength was calculated by dividing the flexural strength of the test piece obtained when shaped using the mixture with the flexural strength of the test piece obtained when shaped using only the virgin polymer particles and the polymer particle composition, and the change rate was evaluated according to the following criteria.

A: 0.9 or more and 1.1 or less
B: 0.8 or more and less than 0.9, or more than 1.1 and 1.2 or less
C: less than 0.8 or more than 1.2

(16) Recovery rate of polymer particles or polymer particle composition remaining after three-dimensional printing:

100 g of the polymer particles or polymer particle composition remaining after three-dimensional printing was sampled, the weight of the polymer particles or polymer particle composition which passed through a 500 $\mu$m sieve was measured, and the weight ratio of the polymer particles or polymer particle composition which passed through the sieve relative to the charged polymer particles or polymer particle composition was determined as the recovery rate. The evaluation was carried out according to the following criteria.

A: Recovery rate is 40 wt% or more.
B: Recovery rate is 30 wt% or more and less than 40 wt%.
C: Recovery rate is less than 30 wt%.
A and B are acceptable, C is fail.

[Production Example 1]

600g of amino dodecanoic acid (supplied by Wako Pure Chemical Industries, Ltd.) as a polyamide monomer, 2,400g of polyethylene glycol (1st grade polyethylene glycol 20,000 supplied by Wako Pure Chemical Industries, Ltd.) as a polymer incompatible with the polyamide to be obtained, 4.2g of "IRGANOX" 1098 (supplied by BASF Japan Ltd.) as an antioxidant, 1,500g of deionized water, and 2.7g (0.8 mol%) of benzoic acid as a terminal adjuster were added to a 9L autoclave and sealed, and then the process of pressurizing with nitrogen to 1 MPa and releasing the pressure to 0.1 MPa was repeated three times, and the inside of the vessel was replaced with nitrogen, and then the pressure was adjusted to 0.1 MPa and the vessel was sealed. Thereafter, the stirring speed was set at 30 rpm, and the temperature was elevated to 220°C. At that time, a pressure control operation was performed so that the pressure in the system became 1.0 MPa. Next, the pressure was released at a rate of 0.02 MPa/min, and the internal pressure was set at 0 MPa. Thereafter, the polymerization temperature was set at 220°C, and nitrogen was flowed at a rate of 5mL/min to carry out polymerization for 3 hours. Finally, the mixture was discharged into a 2,000g water bath to obtain a slurry. After the slurry was sufficiently homogenized by stirring, it was filtered, and 2,000g of water was added to the filtered material, which was then washed at 80°C. Thereafter, the slurry solution, removed with aggregates by passing through a 100$\mu$m sieve, was filtered again and the isolated filtered material was dried at 80°C for 12 hours to obtain 480g of polymer particles (yield: 80%). The polymer particles were then heated for 12 hours under a nitrogen atmosphere at a temperature of the melting point of the polyamide constituting the polymer particles - 5°C. The properties of the obtained polymer particles are shown in Table 1.

[Production Example 2]

Polymer particles were obtained in the same manner as in Production Example 1 other than a condition where the terminal adjuster was changed to 3.6g (0.8 mol%) of adipic acid. The properties of the obtained polymer particles are shown in Table 1.

[Production Example 3]

Polymer particles were obtained in the same manner as in Production Example 1, other than conditions where the polyamide monomer was changed to 900g of 11-amino undecanoic acid (supplied by Sigma-Aldrich Co. LLC), the polymer incompatible with the polyamide to be obtained was changed to 900g of polyethylene glycol (supplied by Wako Pure Chemical Industries, Ltd., grade 1 polyethylene glycol 20,000), the antioxidant was changed to 6.0g of "IRGANOX" 1098 (supplied by BASF Japan Ltd.), the amount of deionized water was changed to 2,700g, and the terminal adjuster was changed to 3.0g (0.5 mol%) of benzoic acid. The properties of the obtained polymer particles are shown in Table 1.

[Production Example 4]

Polymer particles were obtained in the same manner as in Production Example 1, other than conditions where the polyamide monomer was changed to 309g of 1,10-diaminodecane (supplied by Tokyo Chemical Industry Co., Ltd.) and 411g of dodecanedioic acid (supplied by Wako Pure Chemical Industries, Ltd.), the polymer incompatible with the polyamide to be obtained was changed to 1,080 g of polyethylene glycol (supplied by Wako Pure Chemical Industries, Ltd. grade 1 polyethylene glycol 20,000), the antioxidant was changed to 5.0g of "IRGANOX" 1098 (supplied by BASF Japan Ltd.), the amount of deionized water was changed to 900g, and the terminal adjuster was changed to 2.64 g (0.6 mol%) of benzoic acid. The properties of the obtained polymer particles are shown in Table 1.

[Production Example 5]

Polymer particles were obtained in the same manner as in Production Example 4, other than conditions where the terminal adjuster was changed to 2.0g (0.6 mol%) of stearic acid and the heat treatment at the melting point of the polyamide constituting the polymer particles - 5°C was not performed. The properties of the obtained polymer particles are shown in Table 1.

[Production Example 6]

Polymer particles were obtained in the same manner as in Production Example 5, other than a condition where the terminal adjuster was changed to 2.4 g (1.0 mol %) of lauric acid. The properties of the obtained polymer particles are shown in Table 1.

[Production Example 7]

Polymer particles were obtained in the same manner as in Production Example 1, other than conditions where the polyamide monomer was changed to 1,080g of ε-caprolactam (special grade reagent, supplied by Fuji Film Wako Pure Chemical Industries, Ltd.), the polymer incompatible with the polyamide to be obtained was changed to 720g of polyethylene glycol (1st grade polyethylene glycol 6,000, molecular weight 7,700, supplied by Wako Pure Chemical Industries, Ltd.), the antioxidant was changed to 7.5g of "IRGANOX" 1098 (supplied by BASF Japan Ltd.), the amount of deionized water was changed to 150g, and the terminal adjuster was changed to 9.33g (0.8 mol%) of benzoic acid (supplied by Fuji Film Wako Pure Chemical Industries, Ltd.). The properties of the obtained polymer particles are shown in Table 1.

[Production Example 8]

Polymer particles were obtained in the same manner as in Production Example 7, other than a condition where the terminal adjuster was changed to 15.3g (0.6 mol%) of stearic acid. The properties of the obtained polymer particles are shown in Table 1.

[Production Example 9]

Polymer particles were obtained in the same manner as in Production Example 1, other than a condition where the terminal adjuster was not added. The properties of the obtained polymer particles are shown in Table 1.

[Production Example 10]

Polymer particles were obtained in the same manner as in Production Example 7, other than a condition where the heating was not performed at the melting point of the polyamide constituting the polymer particles - 5°C. The properties of the obtained polymer particles are shown in Table 1.

[Production Example 11]

6 kg of the polymer particles obtained by repeating Production Example 1 were added to a 9L autoclave, and after sealing it, the process of pressurizing with nitrogen to 1 MPa and releasing the pressure to 0.1 MPa was repeated three times, the inside of the vessel was replaced with nitrogen, the pressure was adjusted to 0.1 MPa, and the vessel was sealed. Thereafter, the stirring speed was set at 30 rpm, the temperature was elevated to 220°C, and after maintaining for 30 minutes, it was discharged into a 6000 g water bath. The obtained resin was cut into pellets, which were cooled to -192°C with liquid nitrogen and pulverized in a turbo mill for 60 minutes to obtain polymer particles. The properties of the obtained polymer particles are shown in Table 1.

[Reference Production Example 1]

Polymer particles were obtained in the same manner as in Production Example 6, other than a condition where the terminal adjuster was changed to 4.1g (0.5 mol %) of dodecanedioic acid. The properties of the obtained polymer particles are shown in Table 1.

[Example 1]

Using 7.5 kg of the polymer particles obtained by repeating Production Example 1, a three-dimensional shaped article was produced using a powder bed fusion apparatus (RaFaElII300) supplied by Aspect Inc. Thereafter, 1.5 kg of virgin polymer particles were added to 6 kg of the remaining polymer particles which did not become a shaped article, and using this, recycle printing of a three-dimensional shaped article was carried out again using a powder bed fusion apparatus (RaFaElII300) supplied by Aspect Inc. The properties of the three-dimensional shaped article are shown in Table 2.

[Example 2]

To 7.5 kg of polymer particles obtained by repeating Production Example 1, 7.5 g of trimethyl silylated amorphous silica (X-24-9500, supplied by Shin-Etsu Chemical Co., Ltd.) was added as a flow aid to obtain a polymer particle composition, and a three-dimensional shaped article was produced using a powder bed fusion apparatus (RaFaElII300) supplied by Aspect Inc. Thereafter, 1.5 kg of virgin polymer particle composition was added to 6 kg of the remaining polymer particle composition which did not become a shaped article, and using this, recycle printing of a three-dimensional shaped article was carried out using a powder bed fusion apparatus (RaFaElII300) supplied by Aspect Inc. The properties of the three-dimensional shaped article are shown in Table 2.

[Example 3]

A shaped article was prepared in the same manner as in Example 2, other than conditions where 22.5 g of trimethyl silylated amorphous silica (X-24-9500, supplied by Shin-Etsu Chemical Co., Ltd.) as a flow aid and 2.25 kg of glass fibers (EGB70M-01N, supplied by Nippon Electric Glass Co., Ltd.) were added to 5.25 kg of polymer particles obtained by repeating Production Example 1 to obtain a polymer particle composition. The properties of the three-dimensional shaped article are shown in Table 2.

[Example 4]

A shaped article was prepared in the same manner as in Example 2, other than conditions where 7.5 g of trimethyl silylated amorphous silica (X-24-9500, supplied by Shin-Etsu Chemical Co., Ltd.) and 2.25 kg of glass beads GB731A (supplied by Potters- Ballotini Co., Ltd., average major axis diameter: 27 $\mu$m, average minor axis diameter: 26 $\mu$m) were added as flow aids to 5.25 kg of the polymer particles obtained in Production Example 1 to obtain a polymer particle composition. The properties of the three-dimensional shaped article are shown in Table 2.

[Example 5]

A shaped article was prepared in the same manner as in Example 3, other than a condition where the polymer particles were changed to the polymer particles obtained in Production Example 2. The properties of the three-dimensional shaped article are shown in Table 2.

[Example 6]

A shaped article was prepared in the same manner as in Example 3, other than a condition where the polymer particles were changed to the polymer particles obtained in Production Example 3. The properties of the three-dimensional shaped article are shown in Table 2.

[Example 7]

A shaped article was prepared in the same manner as in Example 3, other than a condition where the polymer particles were changed to the polymer particles obtained in Production Example 4. The properties of the three-dimensional shaped article are shown in Table 2.

[Example 8]

A shaped article was prepared in the same manner as in Example 3, other than a condition where the polymer particles were changed to the polymer particles obtained in Production Example 5. The properties of the three-dimensional shaped article are shown in Table 2.

[Example 9]

A shaped article was prepared in the same manner as in Example 3, other than a condition where the polymer particles were changed to the polymer particles obtained in Production Example 6. The properties of the three-dimensional shaped article are shown in Table 2.

[Example 10]

A shaped article was prepared in the same manner as in Example 3, other than a condition where the polymer particles were changed to the polymer particles obtained in Production Example 7. The properties of the three-dimensional shaped article are shown in Table 2.

[Example 11]

A shaped article was prepared in the same manner as in Example 3, other than a condition where the polymer particles were changed to the polymer particles obtained in Production Example 8. The properties of the three-dimensional shaped article are shown in Table 2.

[Comparative Example 1]

A shaped article was prepared in the same manner as in Example 3, other than a condition where the polymer particles were changed to the polymer particles obtained in Production Example 9. The properties of the three-dimensional shaped article are shown in Table 2.

[Comparative Example 2]

A shaped article was prepared in the same manner as in Example 3, other than a condition where the polymer particles were changed to the polymer particles obtained in Production Example 10. The properties of the three-dimensional shaped article are shown in Table 2.

[Comparative Example 3]

A shaped article was prepared in the same manner as in Example 3, other than a condition where the polymer particles were changed to the polymer particles obtained in Production Example 11. The properties of the three-dimensional shaped article are shown in Table 2.

[Reference Example 1]

A shaped article was prepared in the same manner as in Example 3, other than a condition where the polymer particles were changed to the polymer particles obtained in Reference Production Example 1. The properties of the three-dimensional shaped article are shown in Table 2.

[Table 1] (divided to Table 1-1 and Table 1-2)

[Table 1-1]

| | Production Example 1 | Production Example 2 | Production Example 3 | Production Example 4 | Production Example 5 | Production Example 6 |
|---|---|---|---|---|---|---|
| Polyamide monomer (a) | amino dodeca-noic acid | amino dodeca-noic acid | 11-amino unde-canoic acid | 1,10-diaminode-cane dodecane-dioic acid | 1,10-diaminode-cane dodecane-dioic acid | 1,10-diaminode-cane dodecane-dioic acid |
| Terminal adjuster (C) | benzoic acid | adipic acid | benzoic acid | benzoic acid | stearic acid | lauric acid |
| Sphericity of polymer particle | 95 | 95 | 95 | 95 | 95 | 95 |
| Average particle diameter of polymer particles [$\mu$m] | 50 | 51 | 52 | 46 | 48 | 48 |
| Terminal adjuster content [wt%] | 0.06 | 0.10 | 0.09 | 0.09 | 0.03 | 0.04 |
| Terminal carboxyl group amount in poly-amide constituting polymer particle [$\times 10^{-5}$ mol/g] | 15.8 | 12.5 | 8.6 | 8.7 | 10.2 | 13.4 |
| Terminal amino group amount in polya-mide constituting polymer particle [$\times 10^{-5}$ mol/g] | 1.5 | 2.0 | 3.7 | 3.2 | 1.3 | 1.7 |
| Ratio of terminal carboxyl group amount to terminal amino group amount in polyamide constituting polymer particle | 0.1 | 0.2 | 0.4 | 0.4 | 0.1 | 0.1 |
| Melting point of polyamide constituting polymer particle [°C] | 179 | 178 | 183 | 190 | 188 | 190 |
| Change rate of molecular weight | 1.1 | 1.1 | 1.2 | 1.3 | 1.0 | 1.1 |
| Molecular weight of polyamide constituting polymer particle [g/mol] | 20,000 | 10,000 | 38,000 | 49,000 | 35,000 | 29,000 |
| BET specific surface area of polymer particle [$m^2$/g] | 0.16 | 0.15 | 0.14 | 0.15 | 0.15 | 0.15 |
| SP value of polyamide constituting poly-mer particle (A) [$(J/cm^3)^{1/2}$] | 18.9 | 18.9 | 19.3 | 19.1 | 19.1 | 19.1 |
| SP value of polymer (B) [$(J/cm^3)^{1/2}$] | 21.3 | 21.3 | 21.3 | 21.3 | 21.3 | 21.3 |

|  | Production Example 1 | Production Example 2 | Production Example 3 | Production Example 4 | Production Example 5 | Production Example 6 |
|---|---|---|---|---|---|---|
| SP value of terminal adjuster (C) $[(J/cm^3)^{1/2}]$ | 23.2 | 24.76 | 23.2 | 23.2 | 16.7 | 17.5 |
| $(\delta_B-\delta_C)^2-(\delta_A-\delta_C)^2[(J/cm^3)]$ | -14.8 | -22.2 | -11.6 | -13.2 | 15.4 | 11.9 |

[Table 1-2]

| | Production Example 7 | Production Example 8 | Production Example 9 | Production Example 10 | Production Example 11 | Reference Production Example 1 |
|---|---|---|---|---|---|---|
| Polyamide monomer (a) | ε-caprolactam | ε-caprolactam | amino dodecanoic acid | ε-caprolactam | amino dodecanoic acid | 1,10-diaminodecanc dodecanedioic acid |
| Terminal adjuster (C) | benzoic acid | stearic acid | - | benzoic acid | benzoic acid | dodecanedioic acid |
| Sphericity of polymer particle | 95 | 95 | 95 | 95 | 70 | 95 |
| Average particle diameter of polymer particles [$\mu$ m] | 51 | 50 | 50 | 51 | 50 | 50 |
| Terminal adjuster content [wt%] | 0.01 | 0.14 | 0 | 0.25 | 0.07 | 0.01 |
| Terminal carboxyl group amount in polyamide constituting polymer particle [$\times 10^{-5}$ mol/g] | 4.0 | 17 | 8.0 | 6 | 15.8 | 10.6 |
| Terminal amino group amount in polyamide constituting polymer particle [$\times 10^{-5}$ mol/g] | 0.8 | 3.7 | 7.8 | 1.8 | 1.5 | 1.8 |
| Ratio of terminal carboxyl group amount to terminal amino group amount in polyamide constituting polymer particle | 0.2 | 0.2 | 1 | 0.3 | 0.1 | 0.2 |
| Melting point of polyamide constituting polymer particle [°C] | 217 | 217 | 179 | 213 | 179 | 188 |
| Change rate of molecular weight | 1.0 | 1.1 | 1.8 | 1.1 | 1.1 | 1.1 |
| Molecular weight of polyamide constituting polymer particle [g/mol] | 63,000 | 40,000 | 44,000 | 49,000 | 20,000 | 37,000 |
| BET specific surface area of polymer particle [$m^2$/g] | 0.15 | 0.15 | 0.16 | 0.16 | 6.3 | 0.15 |
| SP value of polyamide constituting polymer particle (A) [$(J/cm^3)^{1/2}$] | 21.9 | 21.9 | 18.9 | 21.9 | 18.9 | 19.1 |
| SP value of polymer (B) [$(J/cm^3)^{1/2}$] | 21.3 | 21.3 | 21.3 | 21.3 | 21.3 | 21.3 |
| SP value of terminal adjuster (C) [$(J/cm^3)^{1/2}$] | 23.2 | 16.7 | - | 23.2 | 23.2 | 19.2 |
| $(\delta_B-\delta_C)^2-(\delta_A-\delta_C)^2[(J/cm^3)]$ | 1.9 | -5.9 | - | 1.9 | -14.8 | 4.4 |

[Table 2]

| | Example 1 | Example 2 | Example 3 | Example 4 | Example 5 | Example 6 | Example 7 | Example 8 |
|---|---|---|---|---|---|---|---|---|
| Surface roughness of three-dimensional shaped article [μm] | 12 | 10 | 10 | 10 | 10 | 10 | 10 | 10 |
| Average sphere equivalent diameter of voids observed by X-ray CT imaging | 32 | 32 | 33 | 31 | 33 | 34 | 34 | 32 |
| Ratio of terminal carboxyl group amount to terminal amino group amount in polyamide constituting three-dimensional shaped article | 0.1 | 0.1 | 0.1 | 0.1 | 0.1 | 0.2 | 0.2 | 0.1 |
| Terminal adjuster content of three-dimensional shaped article [wt%] | 0.04 | 0.04 | 0.04 | 0.04 | 0.06 | 0.05 | 0.05 | 0.03 |
| Change rate of surface smoothness of three-dimensional shaped article when recycle shaped | A | A | A | A | A | A | A | A |
| Change rate of mechanical strength of three-dimensional shaped article when recycle shaped | A | A | A | A | A | A | A | A |

(continued)

|  | Example 1 | Example 2 | Example 3 | Example 4 | Example 5 | Example 6 | Example 7 | Example 8 |
|---|---|---|---|---|---|---|---|---|
| Recovery rate of polymer particles or polymer particle composition after three-dimensional printing | B | B | B | B | B | B | B | A |

|  | Example 9 | Example 10 | Example 11 | Comparative Example 1 | Comparative Example 2 | Comparative Example 3 | Reference Example 1 |
|---|---|---|---|---|---|---|---|
| Surface roughness of three-dimensional shaped article [$\mu$m] | 10 | 10 | 10 | 10 | 10 | 10 | 10 |
| Average sphere equivalent diameter of voids observed by X-ray CT imaging | 32 | 33 | 31 | 33 | 34 | 34 | 34 |
| Ratio of terminal carboxyl group amount to terminal amino group amount in polyamide constituting three-dimensional shaped article | 0.1 | 0.1 | 0.1 | 1 | 0.1 | 0.1 | 0.1 |
| Terminal adjuster content of three-dimensional shaped article [wt%] | 0.02 | 0.01 | 0.09 | 0 | 0.20 | 0.07 | 0.01 |

(continued)

|  | Example 9 | Example 10 | Example 11 | Comparative Example 1 | Comparative Example 2 | Comparative Example 3 | Reference Example 1 |
|---|---|---|---|---|---|---|---|
| Change rate of surface smoothness of three-dimensional shaped article when recycle shaped | A | A | A | A | A | C | A |
| Change rate of mechanical strength of three-dimensional shaped article when recycle shaped | A | A | A | C | A | B | A |
| Recovery rate of polymer particles or polymer particle composition after three-dimensional printing | A | A | B | A | C | A | A |

Industrial Applicability

The polymer particles and polymer particle composition of the present invention have a high particle sphericity, a small ratio of the terminal carboxyl group amount to the terminal amino group amount of the polyamide constituting the particles, and few impurities, and therefore, when recycled printing is performed using a large-scale printing machine, the surface smoothness and mechanical strength of the shaped article can be maintained even without mixing a large amount of virgin polymer particles and polymer particle composition, and the residual particles can be easily recovered, allowing the waste particles to be reduced.

Explanation of symbols

1: vessel for forming shaped article
2: stage of vessel for forming shaped article
3: supply vessel filled in advance with polymer particles or polymer particle composition to be supplied
4: stage of vessel filled in advance with polymer particles or polymer particle composition to be supplied
5: recoater
6: thermal energy
7: X, Y, Z coordinate system
8: plane direction for layering polymer particles or polymer particle composition
9: height direction for layering polymer particles or polymer particle composition
10: three-dimensional shaped article
11: polymer particles and polymer particle composition which have not become three-dimensional shaped article and remain

P: polymer particles or polymer particle composition

**Claims**

1. A polymer particle constituted of a polyamide for producing a three-dimensional shaped article by a powder bed fusion method, wherein the sphericity of the polymer particle is 80 or more, the average particle diameter of the polymer particle is 1 μm or more and 100 μm or less, a ratio of a terminal carboxyl group amount to a terminal amino group amount in the polyamide constituting the polymer particle is 0.01 or more and 0.8 or less, and a terminal adjuster content of the polymer particle is more than 0 wt% and 0.2 wt% or less.

2. The polymer particle for producing a three-dimensional shaped article according to claim 1, wherein a change rate between molecular weights of the polyamide constituting the polymer particle before and after being heated when the polymer particle is heated at a temperature of a melting point of the polyamide constituting the polymer particle - 5°C under a nitrogen atmosphere for 12 hours is 0.7 or more and 1.4 or less.

3. The polymer particle for producing a three-dimensional shaped article according to claim 1, wherein a weight average molecular weight of the polyamide constituting the polymer particle is 1,000 g/mol or more and 100,000 g/mol or less.

4. The polymer particle for producing a three-dimensional shaped article according to claim 1, wherein the terminal amino group amount in the polyamide constituting the polymer particle is $0.1 \times 10^{-5}$ mol/g or more and $4.0 \times 10^{-5}$ mol/g or less.

5. The polymer particle for producing a three-dimensional shaped article according to claim 1, wherein a BET specific surface area of the polymer particle is 0.05 $m^2$/g or more and 1 $m^2$/g or less.

6. The polymer particle for producing a three-dimensional shaped article according to claim 1, wherein the polyamide constituting the polymer particle includes at least one kind of polyamide selected from the group consisting of polyamide 12, polyamide 11, polyamide 1012, polyamide 1010, polyamide 6, polyamide 66, and a copolymer containing any of them.

7. A polymer particle composition for producing a three-dimensional shaped article, containing a flow aid at 0.01 part by mass or more and 5 parts by mass or less with respect to 100 parts by mass of the polymer particle according to any of claims 1 to 6.

8. A polymer particle composition for producing a three-dimensional shaped article, containing an inorganic reinforcing material at 10 parts by mass or more and 200 parts by mass or less with respect to 100 parts by mass of the polymer particle according to any of claims 1 to 6.

9. A method for producing a three-dimensional shaped article by a powder bed fusion method, using the polymer particle according to any of claims 1 to 6.

10. A method for producing a three-dimensional shaped article by a powder bed fusion method, using the polymer particle composition according to claim 7.

11. A method for producing a three-dimensional shaped article by a powder bed fusion method, using the polymer particle composition according to claim 8.

12. A three-dimensional shaped article produced by a powder bed fusion method using a polymer particle or a polymer particle composition, wherein it includes a surface with a surface roughness of the three-dimensional shaped article of 15 μm or less, an average sphere equivalent diameter of voids observed by X-ray CT imaging is 1 μm or more and 100 μm or less, a ratio of a terminal carboxyl group amount to a terminal amino group amount in a polyamide constituting the polymer particle is 0.01 or more and 0.8 or less, and a terminal adjuster content is more than 0 wt% and 0.15 wt% or less.

13. A method for producing the polymer particle for producing a three-dimensional shaped article according to claim 1, which is a method for producing a polymer particle by polymerizing a polyamide monomer (a) under the presence of a polymer (B) and a terminal adjuster (C) and in which the polyamide monomer (a) is being dissolved uniformly in the polymer (B) and a polymer particle (A) is precipitated after polymerization, wherein solubility parameters $\delta_A$, $\delta_B$ and $\delta_C$ of a polyamide constituting the polymer particle (A), the polymer (B) and the terminal adjuster (C) satisfy a relationship of $2 \leq (\delta_B - \delta_C)^2 - (\delta_A - \delta_C)^2 \leq 50$ [(J/cm$^3$)], and a compounding amount of the terminal adjuster (C) is 0.001 mol% or more and 4.0 mol% or less.

# FIG. 1

## INTERNATIONAL SEARCH REPORT

International application No.

**PCT/JP2023/028385**

### A. CLASSIFICATION OF SUBJECT MATTER

*B29C 64/314*(2017.01)i; *B29C 64/153*(2017.01)i; *B29C 64/165*(2017.01)i; *B29C 64/357*(2017.01)i; *B33Y 10/00*(2015.01)i; *B33Y 70/00*(2020.01)i; *B33Y 70/10*(2020.01)i; *C08G 69/00*(2006.01)i; *C08G 69/08*(2006.01)i; *C08K 3/013*(2018.01)i; *C08L 77/00*(2006.01)i; *B29K 309/00*(2006.01)n

FI:    B29C64/314; B29C64/153; B29C64/165; B29C64/357; B33Y10/00; B33Y70/00; B33Y70/10; C08G69/00; C08G69/08; C08K3/013; C08L77/00; B29K309:00

According to International Patent Classification (IPC) or to both national classification and IPC

### B. FIELDS SEARCHED

Minimum documentation searched (classification system followed by classification symbols)

B29C64/00-64/40; B33Y10/00-99/00; C08G69/00-69/50; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-1432 A (TORAY INDUSTRIES, INC.) 06 January 2022 (2022-01-06)<br>entire text, all drawings | 1-13 |
| A | JP 2004-137465 A (DEGUSSA AG) 13 May 2004 (2004-05-13)<br>entire text, all drawings | 1-13 |
| A | JP 2018-59093 A (EVONIK DEGUSSA GMBH) 12 April 2018 (2018-04-12)<br>entire text, all drawings | 1-13 |
| A | JP 2009-226952 A (EVONIK DEGUSSA GMBH) 08 October 2009 (2009-10-08)<br>entire text, all drawings | 1-13 |
| A | US 2019/0030788 A1 (HEWLETT-PACKARD DEVELOPMENT CO., L. P.) 31 January 2019 (2019-01-31)<br>entire text, all drawings | 1-13 |

☑ Further documents are listed in the continuation of Box C.        ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **15 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/028385**

**C.    DOCUMENTS CONSIDERED TO BE RELEVANT**

| Category* | Citation of document, with indication, where appropriate, of the relevant passages | Relevant to claim No. |
|---|---|---|
| A | US 2019/0054688 A1 (HEWLETT-PACKARD DEVELOPMENT CO. L. P.) 21 February 2019 (2019-02-21)<br>entire text, all drawings | 1-13 |
| A | WO 2018/207728 A1 (TORAY INDUSTRIES, INC.) 15 November 2018 (2018-11-15)<br>entire text, all drawings | 1-13 |
| P, X | WO 2022/181633 A1 (TORAY INDUSTRIES, INC.) 01 September 2022 (2022-09-01)<br>claims, paragraphs [0010], [0011], [0013], [0014], [0019], [0024], [0027], [0030], [0033], [0038], [0047], [0055], [0065], [0078], table 1 | 1-13 |

Form PCT/ISA/210 (second sheet) (January 2015)

## INTERNATIONAL SEARCH REPORT
### Information on patent family members

International application No.

**PCT/JP2023/028385**

| Patent document cited in search report | | | Publication date (day/month/year) | Patent family member(s) | | | Publication date (day/month/year) |
|---|---|---|---|---|---|---|---|
| JP | 2022-1432 | A | 06 January 2022 | (Family: none) | | | |
| JP | 2004-137465 | A | 13 May 2004 | US | 2004/0102539 | A1 | |
| | | | | entire text, all drawings | | | |
| | | | | EP | 1413594 | A2 | |
| | | | | DE | 10330590 | A1 | |
| | | | | CA | 2436893 | A1 | |
| | | | | KR | 10-2004-0034365 | A | |
| | | | | CN | 1497016 | A | |
| JP | 2018-59093 | A | 12 April 2018 | US | 2018/0094103 | A1 | |
| | | | | entire text, all drawings | | | |
| | | | | EP | 3301124 | A1 | |
| | | | | CN | 107880285 | A | |
| | | | | CN | 115477770 | A | |
| | | | | JP | 2020-204040 | A | |
| JP | 2009-226952 | A | 08 October 2009 | US | 2009/0236775 | A1 | |
| | | | | entire text, all drawings | | | |
| | | | | EP | 2103643 | A1 | |
| | | | | DE | 102008000755 | A1 | |
| | | | | CN | 101570059 | A | |
| US | 2019/0030788 | A1 | 31 January 2019 | WO | 2017/196330 | A1 | |
| | | | | CN | 108883577 | A | |
| US | 2019/0054688 | A1 | 21 February 2019 | WO | 2017/196361 | A1 | |
| WO | 2018/207728 | A1 | 15 November 2018 | US | 2020/0048413 | A1 | |
| | | | | entire text, all drawings | | | |
| | | | | US | 2023/0034929 | A1 | |
| | | | | EP | 3623411 | A1 | |
| | | | | CN | 110612320 | A | |
| | | | | KR | 10-2019-0141664 | A | |
| | | | | JP | 2019-167545 | A | |
| WO | 2022/181633 | A1 | 01 September 2022 | (Family: none) | | | |

Form PCT/ISA/210 (patent family annex) (January 2015)

33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004137465 A
- JP 2018059093 A

- WO 2022181634 A

**Non-patent literature cited in the description**

- Hoftyzer-Van Krevelen described in Properties of Polymers. Elsevier Science, 2009, 215